# EUROPÄISCHE PATENTSCHRIFT

(11) **EP 4 145 370 B1**
(45) Veröffentlichungstag und Bekanntmachung des Hinweises auf die Patenterteilung: **03.09.2025**
(21) Anmeldenummer: 22202693.2
(22) Anmeldetag: 29.12.2017
(51) Int. Cl.: G06Q 10/087, G07C 9/15, G06K 7/10, G07C 9/00, G07C 9/28, G07C 9/29

(54) **EINRICHTUNG UND VERFAHREN ZUR BESTANDSÜBERWACHUNG**
APPARATUS AND METHOD FOR INVENTORY MONITORING
DISPOSITIF ET PROCÉDÉ DE SURVEILLANCE D'INVENTAIRE

(30) Priorität: 22.02.2017 DE 202017100982 U
(43) Veröffentlichungstag der Anmeldung: 08.03.2023
(62) Teilanmeldung aus: 17211141.1
(73) Patentinhaber: KEMAS Gesellschaft für Elektronik, Elektromechanik, Mechanik und Systeme mbH, 09353 Oberlungwitz (DE)
(72) Erfinder: Uhlig, Silvio, 09123 Chemnitz (DE); Grämer, Hans-Jürgen, 01445 Radebeul (DE); Walosczyk, Ulrich, 09577 Niederwiesa (DE)
(74) Vertreter: Wenzel Nemetzade Warthmüller Patentanwälte Part mbB

(56) Entgegenhaltungen:
- EP-A2- 2 720 198
- CN-U- 203 689 537
- DE-A1- 102011 000 852
- DE-U1- 202012 102 617
- KEMAS: "KEMAS texLOG - Intelligentes Management von Berufskleidung", YOUTUBE, 12 August 2015 (2015-08-12), pages 1, XP054981825, Retrieved from the Internet <URL:https://www.youtube.com/watch?v=vSIu6YKuIjk> [retrieved on 20210521]

## Beschreibung

Die vorliegende Erfindung betrifft eine Einrichtung und ein Verfahren zur Bestandsüberwachung, insbesondere von mit Transpondern versehenen Waren.

Aus dem Stand der Technik in der Druckschrift DE 20 2012 102 617 U1 ist eine Lagereinrichtung mit einem Eingang sowie einem Ausgang bekannt, wobei der Ausgang als Schleuse ausgebildet ist. Innerhalb der Ausgangsschleuse erfolgt eine Erfassung der durch eine Person mitgeführten Waren. Die jeweils erfassten Waren werden anschließend der Chipkartennummer des jeweiligen Nutzers zugeordnet. Die Lagereinrichtung gemäß diesem Stand der Technik kann jedoch mit verhältnismäßig geringem Aufwand manipuliert werden. Beispielsweise kann nicht ausgeschlossen werden, dass Nutzer den Lagerraum wieder über die Eingangstür verlassen und dabei mitgeführte Waren nicht erfasst werden. Insbesondere kann die Eingangstür hierfür offen gehalten oder durch einen Stopper in geöffneter Stellung fixiert werden. Es besteht daher die Gefahr, dass der Bestand innerhalb des Lagerraums unkontrolliert verändert wird, insbesondere durch Manipulationen.

Der Stand der Technik in der Druckschrift DE 10 2012 020 125 A1 betrifft eine Kontrollvorrichtung zur Kontrolle des Transfers von Wäschestücken aus beziehungsweise in ein Wäschemagazin. Gemäß diesem Stand der Technik ist eine Zugangseinrichtung vorgesehen, die in Verwendungsposition einen für einen Benutzer bidirektional passierbaren Zugang zum Wäschemagazin aufweist. Der Nutzer betritt das Wäschemagazin demnach über eine Zugangseinrichtung und verlässt das Wäschemagazin nach Entnahme der jeweils gewünschten Wäschestücke wieder über dieselbe Zugangseinrichtung. Gemäß diesem Stand der Technik ist die bidirektional passierbare Zugangseinrichtung als Schleuse eingerichtet. Sowohl die Zuführung von Wäschestücken in das Wäschemagazin, beispielsweise durch Wäschedienstleister, als auch die Entnahme von Wäschestücken aus dem Wäschemagazin erfolgt über diese Schleuse. Dies erfordert eine universelle Auslegung der Schleuse, wodurch ein hoher konstruktiver Aufwand beziehungsweise hohe Kosten für die Einrichtung verursacht werden können. Ferner erfordert eine solche universelle Schleuse einen verhältnismäßig großen Bauraum, insbesondere für das Passieren durch einen Wäschewagen sowie Begleitpersonen. Bei einem entsprechenden Bauraum können jedoch Manipulationen, beispielsweise durch Betreten und Verlassen des Wäschemagazins durch mehrere Personen, nicht ausreichend sicher vermieden werden. Durch den Einsatz einer universellen Schleuse besteht daher die Gefahr einer unzureichenden Selektionssicherheit, sodass der Warenbestand im Wäschemagazin nur unzureichend überwacht werden kann.

Vor diesem Hintergrund liegt der vorliegenden Erfindung die Aufgabe zu Grunde, eine Einrichtung anzugeben, mit der eine Bestandsüberwachung, insbesondere von mit Transpondern versehenen Waren, mit erhöhter Zuverlässigkeit vorgenommen werden kann. Diese Aufgabe ist durch eine Einrichtung zur Bestandsüberwachung gemäß Anspruch 1 gelöst worden. Vorteilhafte Ausgestaltungen sind Gegenstand der abhängigen Ansprüche.

Eine erfindungsgemäße Einrichtung zur Bestandsüberwachung, von mit Transpondern versehenen Waren, ist ausgestattet mit einem Lagerraum zur Lagerung oder Zwischenlagerung von Waren, mit einer Personenvereinzelungsvorrichtung, über die der Lagerraum von einer Person betreten und/oder verlassen werden kann und mit einem Warendurchgang, über den Waren in den Lagerraum hinein und/oder aus dem Lagerraum heraus verbracht werden können, wobei der Warendurchgang zumindest eine Erfassungsvorrichtung aufweist, die zur Er-fassung von mit Transpondern versehenen Waren eingerichtet ist und wobei die Personenvereinzelungsvorrichtung und der Warendurchgang separat ausgebildet sind. Unter Bestandsüberwachung soll hier insbesondere die permanente Erfassung und/oder Kontrolle von Bestandsveränderungen verstanden werden. Dabei kann die Bestandsüberwachung kontinuierlich Echtzeit erfolgen.

Der Lagerraum ist vorzugsweise allseitig umschlossen. Die erfindungsgemäße Einrichtung zur Bestandsüberwachung umfasst neben der Personenvereinzelungsvorrichtung auch eine Warendedektion/-erfassung.

Mit einer derartigen Einrichtung können die Personenvereinzelungsvorrichtung und der Warendurchgang, insbesondere aufgrund der separaten Ausbildung, für den jeweiligen Einsatzzweck spezialisiert ausgeführt sein. Die voneinander unabhängige Ausgestaltung erlaubt die Personenvereinzelungsvorrichtung für die reine Personenvereinzelung wie auch als Zugangskontrolle zu dimensionieren. Die Selektionssicherheit kann hiermit verbessert werden, sodass die Gefahr von Manipulationen und somit auch einer ungenügenden Bestandsüberwachung reduziert wird. Insbesondere kann die absolute Anzahl von Personen im Lagerraum auf diese Weise mit erhöhter Sicherheit gesteuert und damit beschränkt werden. Gleichzeitig erlaubt der von der Personenvereinzelungsvorrichtung separat ausgebildete Warendurchgang, diesen im Schwerpunkt auf die Warenerfassung auszulegen. Hierdurch kann die Warenerfassungssicherheit weiter verbessert werden, was wiederum die Sicherheit der Bestandsüberwachung erhöht.

Nach einer bevorzugten Ausgestaltung sind die Personenvereinzelungsvorrichtung und der Warendurchgang unabhängig voneinander betätigbar und/oder unabhängig voneinander konfigurierbar. Die Einsatzflexibilität wird hierdurch erhöht. Bevorzugt sind die Personenvereinzelungsvorrichtung und der Warendurchgang aneinander angrenzend oder voneinander beabstandet, insbesondere durch einen Wandabschnitt getrennt, angeordnet, wodurch eine Anpassung an die baulichen Gegebenheiten des Lagerraums vorgenommen werden kann.

In weiter bevorzugter Ausgestaltung ist die Personenvereinzelungsvorrichtung als Drehkreuz, insbesondere in einer Ausführung als vertikales Drehkreuz, Sicherheitskarussell, Drehsperre, Sensorschleuse oder Personenschleuse ausgebildet ist. Derartige Vorrichtungen gewährleisten eine hohe Selektionssicherheit bei verhältnismäßig geringem konstruktivem Aufwand. Bevorzugt ist die Personenvereinzelungsvorrichtung in zumindest personenhoher Ausführung und/oder unübersteigbar noch für Waren durchreichbar ausgebildet, wodurch die Selektionssicherheit weiter verbessert werden kann. Die Personenvereinzelungsvorrichtung ist dazu eingerichtet, dass jeweils nur eine Person durch diese passieren kann. Demgemäß erfolgt eine vollständige Vereinzelung. Weiterhin kann es vorteilhaft sein, wenn die Personenvereinzelungsvorrichtung zumindest eine Identifizierungsvorrichtung zur Erfassung der Identität einer Person aufweist. Dabei kann eine Identifizierungsvorrichtung außerhalb des Lagerraums und/oder innerhalb des Lagerraums angeordnet sein, bevorzugt sowohl eine Identifizierungsvorrichtung außerhalb als auch eine Identifizierungsvorrichtung innerhalb des Lagerraums. Die Selektionssicherheit sowohl für das Eintreten als auch das Verlassen des Lagerraums lässt sich hierdurch verbessern. Dabei kann die Personenvereinzelungsvorrichtung dazu eingerichtet sein, das Passieren einer Person in Abhängigkeit der festgestellten Personenidentität freizugeben und/oder zu blockieren. Ferner kann die Identifizierungsvorrichtung dazu eingerichtet sein, das Betreten des Lagerraumes durch einen Nutzer/Kunden, der die Waren aus dem Lagerraum kontrolliert entnimmt, und/oder durch einen Dienstleister/Lieferanten zu erfassen und/oder zwischen Nutzer/Kunden und Dienstleister/Lieferanten differenziert zu erfassen. Unter Nutzer/Kunden wird hier eine Person verstanden, welche die Waren aus dem Lagerraum zwecks Nutzung entnimmt. Unter einem Dienstleister/Lieferant wird demgegenüber eine Person verstanden, welche den Lagerraum mit Waren beschickt. Die Funktionalität der Einrichtung kann hierdurch flexibel auf die einzelnen Vorgänge der Warenbeschickung und der Warenentnahme eingerichtet werden. In vorteilhafter Weise kann die Identifizierungsvorrichtung zur Identifikation mittels eines Codes, einer persönlichen Identifikationsnummer (PIN), einer Karte oder mittels biometrischer Informationen, bevorzugt mittels Iris-, Handflächen und/oder Fingerabdruckscan, eingerichtet sein. Dies gewährleistet eine hohe Betriebssicherheit bei nur begrenztem Aufwand.

**In** weiter bevorzugter Ausgestaltung weist die Personenvereinzelungsvorrichtung eine Warenerfassungsvorrichtung für mitgeführte Waren auf, insbesondere mit einem Transponder versehene Waren, wobei die Personenvereinzelungsvorrichtung bevorzugt dazu eingerichtet ist, das Passieren einer Person bei Erfassung unberechtigt mitgeführter Waren zu blockieren und/oder das Passieren einer Person freizugeben, sofern keine Waren, keine unberechtigt mitgeführten Waren und/oder lediglich berechtigt mitgeführte Waren erfasst werden. Beispielsweise kann hierdurch erreicht werden, dass der Nutzer beim Betreten des Lagerraums mit der am Körper getragenen Wäsche/Kleidung, die insbesondere mit Transpondern versehen ist, erfasst werden, aber am Verlassen des Lagerraums durch die Personenvereinzelungsvorrichtung mit zusätzlich mitgeführten Waren gehindert werden. Der Nutzer wird damit zwingend veranlasst, den Lagerraum durch den Warendurchgang zu verlassen, der auf die Warenerfassung in hoher Erkennungsquote eingerichtet ist.

Die Warenerfassungsvorrichtung der Personenvereinzelungsvorrichtung kann bevorzugt als RFID-Leseeinrichtung ausgebildet sein, weiter bevorzugt als **UHF-**RFID-Leseeinrichtung oder als RFID-Leseeinrichtung mit noch höherem Frequenzbereich.

Weiter bevorzugt kann die Personenvereinzelungsvorrichtung zumindest eine Anzeige zur Visualisierung des Betriebszustandes aufweisen, bevorzugt zur Visualisierung eines Freigabe- und/oder Blockierzustandes. Die Bedienerfreundlichkeit kann dadurch verbessert werden, insbesondere für die Nutzung durch ungeschultes oder unerfahrenes Personal.

Gemäß einer weiteren bevorzugten Ausgestaltung der Einrichtung weist die Personenvereinzelungsvorrichtung eine Steuerungseinheit und/oder eine Auswerteeinheit auf, die bevorzugt in eine übergeordnete IT-Struktur, besonderes bevorzugt umfassend zumindest eine Datenbank, eingebunden ist und/oder wobei die Steuerungseinheit und/oder die Auswerteeinheit zur Steuerung und/oder Auswertung im Betrieb der Identifizierungsvorrichtung, der Warenerfassungsvorrichtung für mitgeführte Waren und/oder der Anzeige zur Visualisierung des Betriebszustandes eingerichtet ist. Ein zuverlässiger Betrieb kann hierdurch sichergestellt werden.

Erfindungsgemäß ist der Warendurchgang für das Passieren von Personen eingerichtet sowie für das Mitführen von Waren durch Personen beim Verlassen des Lagerraums. Personen können somit den Lagerraum durch die Personenvereinzelungsvorrichtung betreten und wieder durch den Warendurchgang verlassen. Es wird hierdurch einerseits eine hohe Selektionssicherheit beim Betreten und eine hohe Warenerfassungssicherheit beim Verlassen des Lagerraumes sichergestellt. Ferner ist der Warendurchgang dazu eingerichtet, ein Betreten des Lagerraums durch den Warendurchgang zu blockieren. Die Gefahr von Manipulationen kann dadurch verringert werden.

Erfindungsgemäß weist der Warendurchgang zumindest eine Identifizierungsvorrichtung zur Erfassung der Identität einer Person auf. Dabei ist eine Identifizierungsvorrichtung außerhalb des Lagerraums und eine Identifizierungsvorrichtung innerhalb des Lagerraums angeordnet. Unberechtigter Zutritt zum Warendurchgang beziehungsweise durch diesen hindurch kann somit zuverlässig unterbunden werden.

Erfindungsgemäß ist der Warendurchgang dazu eingerichtet, das Passieren einer Person in Abhängigkeit der festgestellten Personenidentität freizugeben und/oder zu blockieren, und die Identifizierungsvorrichtung dazu eingerichtet ist, das Verlassen des Lagerraumes durch einen Nutzer zu erfassen und das Verlassen des Lagerraums durch einen Dienstleister durch den Warendurchgang zu blockieren. Auf diese Weise kann vorgeschrieben werden, dass Dienstleister den Lagerraum stets über die Personenvereinzelungsvorrichtung und Nutzer nach Warenentnahme den Lagerraum über den Warendurchgang verlassen.

Weiter bevorzugt weist der Warendurchgang zumindest eine Begrenzungseinrichtung auf. Noch weiter bevorzugt ist eine Begrenzungseinrichtungen lagerraumseitig und eine weitere Begrenzungseinrichtung außenraumseitig vorgesehen. Dabei kann die Begrenzungseinrichtung zum temporären Begrenzen eines lagerraumseitigen Ausgangs aus dem Warendurchgang und/oder eines außenraumseitigen Ausgangs aus dem Warendurchgang und/oder zum temporären Begrenzen der Position von Waren innerhalb des Warendurchgangs ausgebildet sein. Der Warendurchgang kann hierdurch besonders vorteilhaft freigegeben oder blockiert werden. Insbesondere kann durch Vorsehen von zwei Begrenzungseinrichtungen der Innenraum des Warendurchgangs begrenzt werden, sodass während eines Erfassungsvorgangs ein Verlassen des Warendurchgangs unterbunden werden kann.

Weiter bevorzugt kann der Warendurchgang eine Schleuse aufweisen, insbesondere eine Sicherheitsschleuse, wobei die Schleuse bevorzugt einen Innenraum des Warendurchgangs begrenzt und/oder wobei die Schleuse in zumindest personenhoher Ausführung und/oder unübersteigbar ausgebildet ist. Hierdurch wird einerseits ein hohes Maß an Sicherheit bei der kontrollierten Warenerfassung als auch ein ausreichend großer Nutzerkomfort sichergestellt.

Ferner kann der Warendurchgang einen Warentunnel aufweisen, insbesondere mit einer Warenfördereinrichtung. Der Warentunnel kann innerhalb der Schleuse oder separat von dieser angeordnet sein. Ein derartiger Warentunnel kann demnach speziell für von Nutzern entnommene Waren ausgebildet sein und daher eine besonders hohe Erfassungssicherheit gewährleisten. Gleichzeitig kann auch innerhalb der Schleuse eine Warenerfassung erfolgen, beispielsweise für die Beschickung des Lagerraums durch einen Dienstleister mit neuen Waren oder um sicherzustellen, dass Nutzer den Warentunnel umgehen und Ware unberechtigt am Körper mitführen.

Weiter bevorzugt kann die Erfassungseinrichtung zur Erfassung von Waren innerhalb der Schleuse und/oder innerhalb des Warentunnels eingerichtet sein. Dabei kann eine Mehrzahl von Erfassungseinrichtungen vorgesehen sein, bevorzugt zumindest eine Erfassungseinrichtung zur Erfassung von Waren innerhalb der Schleuse und/oder zumindest eine Erfassungseinrichtung zur Erfassung von Waren innerhalb des Warentunnels. Dies gestattet eine hohe Einsatzflexibilität des Warendurchgangs und auch eine hohe Erfassungssicherheit.

Gemäß einer weiter bevorzugten Ausgestaltung der Einrichtung kann die Erfassungsvorrichtung des Warendurchgangs für die Bulk-Erfassung von mit Transpondern versehenen Waren und/oder für die Erfassung von durch Personen mitgeführten Waren, insbesondere Einzelobjekten, wenige Transponder/ einstellige Transponderzahl, eingerichtet sein und/oder wobei die Erfassungsvorrichtung zum Betrieb in unterschiedlichen Betriebsmodi und/oder zur automatisierten Umstellung zwischen unterschiedlichen Betriebsmodi eingerichtet ist, insbesondere zwischen einem Betriebsmodus zur Bulk-Erfassung, als nahezu gleichzeitige Erfassung vieler Transponder/hohe Transponderanzahl, und einem Betriebsmodus zur Erfassung von durch Personen mitgeführten Waren. Dabei kann in Abhängigkeit der erfassten Warenanzahl und/oder dem Vorhandensein eines Behälters oder einer Palette oder eines Gebindes im Innenraum des Warendurchgangs zwischen den Betriebsmodi umgestellt werden. Demnach kann bei Einführen eines Transportwagens in den Warendurchgang eine entsprechende Erkennung erfolgen und der Erfassungsvorgang auf die Bulk-Erfassung eingestellt werden, beispielsweise mittels Regulierung der Scandauer. Ebenso kann im Modus zur Einzelerfassung die Scandauer reduziert werden, um die Nutzerfreundlichkeit zu erhöhen.

Weiter bevorzugt kann die Erfassungseinrichtung dazu eingerichtet sein, die von einem Nutzer entnommen und erfassten Waren vom Gesamtbestand des Lagerraums abzuziehen und dem jeweiligen Profil/Konto des Nutzers zuzuordnen und/oder die von einem Dienstleister/Lieferanten durch den Warendurchgang in den Lagerraum verbrachten und erfassten Waren dem Gesamtbestand zuzuordnen/zuzurechnen. Weiter bevorzugt kann die Erfassungseinrichtung des Warentunnels dazu eingerichtet sein, die von einem Nutzer entnommenen und erfassten Waren vom Gesamtbestand abzuziehen und dem jeweiligen Profil des Nutzers zuzuordnen/zuzurechnen. Der Warenbestand wird hierdurch laufend aktualisiert.

Ferner kann die Erfassungseinrichtung der Schleuse dazu eingerichtet sein, bei Erfassung von durch Personen mitgeführten Waren, insbesondere Einzelobjekten, das Passieren der Schleuse durch eine Person aus dem Lagerraum heraus zu blockieren. Der Nutzer wird hierdurch dazu veranlasst, die mitgeführten Waren zwingend durch den Warentunnel erfassen zu lassen, wodurch die Erfassungssicherheit weiter verbessert wird.

Weiter bevorzugt kann die Einrichtung dadurch gekennzeichnet sein, dass die Erfassungsvorrichtung des Warendurchgangs wenigstens eine Leseeinrichtung zur berührungslosen Identifikation von Transpondern aufweist und/oder wobei die Erfassungsvorrichtung, bevorzugt im Innenraum des Warendurchgangs, einen Lesebereich aufweist, der zumindest abschnittsweise innerhalb der Reichweite der Leseeinrichtung angeordnet ist und in dem Waren zur Bulk-Erfassung angeordnet werden können und/oder in den sich Personen, insbesondere mit mitgeführten Waren, begeben können und/oder wobei der Lesebereich durch zumindest eine Begrenzungseinrichtung begrenzt wird, insbesondere durch eine aus zwei Begrenzungseinrichtungen gebildete Schleusen. Eine derartige Erfassungseinrichtung ist nutzerfreundlich zu bedienen und kann gleichzeitig eine hohe Erfassungssicherheit gewährleisten.

Es kann ferner von Vorteil sein, wenn die zumindest eine Begrenzungseinrichtung dazu eingerichtet ist, den lagerraumseitigen und/oder außenraumseitigen Ausgang aus dem Warendurchgang und/oder aus dem Lesebereich und/oder die Entfernung der Waren aus dem Warendurchgang und/oder aus dem Lesebereich erst nach Ablauf einer vorbestimmten Zeitdauer nach Beginn eines jeweiligen Lesevorgangs freizugeben. Durch eine derartige Ausgestaltung der Erfassungsvorrichtung kann vermieden werden, dass die jeweils zu erfassenden Waren zu früh aus dem Lesebereich und/oder dem Warendurchgang entfernt werden und so eine nur unzureichende beziehungsweise unvollständige Erfassung erfolgt. Durch die Begrenzung des Ausgangs aus dem Lesebereich und/oder dem Warendurchgang beziehungsweise durch die Begrenzung der Position der Waren im Lesebereich und/oder im Warendurchgang während der jeweils vorbestimmten Zeitdauer kann mit erhöhter Sicherheit gewährleistet werden, dass eine vollständige Erfassung sämtlicher Waren beziehungsweise der an den Waren angeordneten Transpondern vorgenommen wird und die Waren erst im Anschluss aus dem Lesebereich und/oder dem Warendurchgang entfernt werden. Je nach vorbestimmter Zeitdauer lässt sich hierdurch die Fehlerquote bzw. Fehlerlesequote bei der Bulk-Erfassung und/oder der Einzelerfassung von Waren signifikant verringern, wodurch Zeit und Kosten eingespart werden können.

**In** vorteilhafter Ausgestaltung der Erfassungsvorrichtung entspricht die vorbestimmte Zeitdauer der jeweiligen Lesevorgangsdauer oder ist länger bemessen. Die Zuverlässigkeit der Warenerfassung kann so in besonders hohem Maße gewährleistet werden.

**In** weiter bevorzugter Ausgestaltung der Erfassungsvorrichtung ist/sind die vorbestimmte Zeitdauer und/oder die Lesevorgangsdauer und/oder -geschwindigkeit in Abhängigkeit der Warenmenge und/oder des Warenvolumens und/oder des Warentyps und/oder der Packungsdichte und/oder des Warenbehältnisses und/oder der Transpondertypen/Transponderperformance und/oder der jeweils eingestellten Betriebsmodi, insbesondere einem Betriebsmodus zur Bulk-Erfassung und/oder einem Betriebsmodus zur Erfassung von durch Personen mitgeführten Waren, einstellbar. Auf diese Weise kann bei hoher Zuverlässigkeit im Betrieb der Erfassungsvorrichtung gleichzeitig auch ein hohes Maß an Flexibilität sichergestellt werden. Die Erfassungsvorrichtung kann insbesondere auf den jeweiligen Anwendungsfall angepasst werden, sodass die Effizienz in der Erfassung von Waren nicht durch die konkreten Gegebenheiten unterschiedlicher Erfassungsszenarios beeinträchtigt wird.

Gemäß einer weiter bevorzugten Ausgestaltung der Erfassungsvorrichtung ist/sind die vorbestimmte Zeitdauer und/oder die Lesevorgangsdauer auf Grundlage empirischer Versuchsdaten voreingestellt. Hierbei kann es sich insbesondere um empirische Versuchsdaten unter Berücksichtigung der Warenmenge und/oder des Warenvolumens und/oder des Warentyps und/oder der Packungsdichte und/oder des Warenbehältnisses und/oder der Transpondertypen/Transponderperformance und/oder der jeweiligen Betriebsmodi, insbesondere einem Betriebsmodus zur Bulk-Erfassung und/oder einem Betriebsmodus zur Erfassung von durch Personen mitgeführten Waren handeln. Durch die Nutzung empirischer Versuchsdaten vorzugsweise gespeichert und/oder bewertet und/oder verwaltet in der Auswerteeinheit als vom Anwendungsfall abhängige typische Einstellprofile, kann die Erfassungssicherheit weiter verbessert werden, bei gleichzeitiger Begrenzung der vorbestimmten Zeitdauer und/oder der Lesevorgangsdauer auf ein wirtschaftliches Maß.

In weiter bevorzugter Ausgestaltung der Erfassungsvorrichtung ist/sind die vorbestimmte Zeitdauer und/oder die Lesevorgangsdauer zur Erzielung einer Erfassungsrate von wenigstens 90%, insbesondere von mehr als 95%, weiter bevorzugt von mehr als 99%, besonders bevorzugt von mehr als 99,9% eingestellt. Die im jeweiligen Anwendungsfall noch akzeptable Fehlerquote kann so im Hinblick auf einen wirtschaftlichen Betrieb der Erfassungsvorrichtung auf das jeweils gewünschte Maß eingestellt werden.

Weiterhin kann es von Vorteil sein, wenn bei der erfindungsgemäßen Erfassungsvorrichtung der Lesebereich wenigstens abschnittsweise durch eine Tunnelstruktur begrenzt wird. Eine derartige Tunnelstruktur ist robust im Aufbau und verhältnismäßig einfach herzustellen. Gleichzeitig erlaubt eine Tunnelstruktur die einfache Unterbringung einer Leseeinrichtung. Dabei kann die Tunnelstruktur bevorzugt den lagerraumseitigen und/oder außenraumseitigen Ausgang aus dem Warendurchgang und/oder aus dem Lesebereich bilden. Die zu erfassenden Waren können so mit nur geringem Aufwand in den Lesebereich innerhalb der Tunnelstruktur befördert und auch wieder aus der Tunnelstruktur und damit aus dem Lesebereich entfernt werden. Die Tunnelstruktur kann den Lesebereich seitlich begrenzen. Die korrekte Positionierung der Waren innerhalb des Lesebereichs wird dem Bedienpersonal dadurch erleichtert.

Gemäß einer weiteren vorteilhaften Ausgestaltung der Erfassungsvorrichtung bildet der lagerraumseitige Ausgang und/oder der außenraumseitige Ausgang aus dem Innenraum des Warendurchgangs und/oder aus dem Lesebereich gleichzeitig einen Eingang in den Innenraum des Warendurchgangs und/oder in den Lesebereich. Dabei können der lagerraumseitige Ausgang und/oder der außenraumseitige Ausgang getrennt voneinander ausgebildet sein, insbesondere an gegenüberliegenden Seiten des Innenraums des Warendurchgangs und/oder des Lesebereichs angeordnet sein. Auf diese Weise können Waren an einer Seite des Lesebereichs in diesen hinein befördert und an einer anderen Seite wieder aus diesem entfernt werden. Der Lesebereich bildet somit einen zwingenden Durchgangsbereich in den Lagerbereich hinein und aus diesem heraus.

**In** weiter bevorzugter Ausgestaltung ist auch die jeweils eingangsseitige Begrenzungseinrichtung dazu eingerichtet, den Eingang des Lesebereichs und/oder die Entfernung der Waren aus dem Lesebereich, beispielsweise im Wege einer rückwärtsgewandten Beförderung der Waren, erst nach Ablauf einer vorbestimmten Zeitdauer nach Beginn eines jeweiligen Lesevorgangs freizugeben.

Nach einer weiteren bevorzugten Ausführungsform ist die Begrenzungseinrichtung als Eingangs- oder Ausgangstür, Eingangs- oder Ausgangsgitter oder Eingangs- oder Ausgangsschranke ausgebildet. Bevorzugt ist die Begrenzungseinrichtung verschiebbar, schwenkbar und/oder rollbar. Weiter bevorzugt kann die Begrenzungseinrichtung zwischen einer den Eingang oder Ausgang begrenzenden Begrenzungsposition und einer den Ausgang freigebenden Freigabeposition bewegt werden. Eine solche Ausgestaltung ist kostengünstig realisierbar und einfach in der Bedienung bei gleichzeitig hoher Betriebssicherheit.

Die Begrenzungseinrichtung kann in vorteilhafter Weise elektromechanisch angetrieben sein, was mit nur geringen Kosten bewerkstelligt werden kann.

Weiterhin kann gemäß einer Ausführungsform der Erfassungseinrichtung die Begrenzungseinrichtung während eines Lesevorgangs und/oder vor Ablauf der vorbestimmten Zeitdauer passierbar sein, insbesondere durch einen Nutzer aktiv geöffnet werden. In diesem Fall würde durch die Begrenzungseinrichtung keine Verriegelung erfolgen, wodurch der Gesamtaufbau der Erfassungseinrichtung mit nur geringem konstruktivem Aufwand umgesetzt werden kann. Weiterhin kann die Begrenzungseinrichtung so ausgestaltet sein, dass sie während eines Lesevorgangs nur erschwert passierbar ist. Dies kann beispielsweise bei der Ausbildung als Stopp- oder Pollerelement der Fall sein, die trotz der Positionierung in einer Begrenzungsposition beispielsweise aktiv durch einen Bediener überfahrbar sein können. Ebenso besteht die Möglichkeit, die Begrenzungseinrichtung als Sperreinrichtung zum temporären Verschließen des Ausgangs auszubilden. In diesem Fall erfolgt im Betrieb der Vorrichtung während der vorbestimmten Zeitdauer eine Verriegelung des Ausgangs, sodass Fehlbedienungen, insbesondere eine vorzeitige Entfernung der Waren aus dem Lesebereich, sicher vermieden werden können. Bei einer solchen Ausgestaltung soll das Entfernen von Waren aus dem Lesebereich während des Lesevorgangs vollständig verhindert werden. Vorzugsweise ist die Begrenzungseinrichtung in Grundstellung auf einen nicht-freigebenden Zustand eingestellt, sodass für eine Freigabe eine aktive Umstellung erforderlich wird.

Weiterhin kann es von Vorteil sein, wenn die Leseeinrichtung dazu eingerichtet ist, den Lesevorgang abzubrechen und/oder das Leseergebnis zu verwerfen, wenn die zu erfassenden Waren den Ausgang vor Ablauf der vorbestimmten Zeitdauer und/oder noch während des Lesevorgangs passieren. Eine entsprechende Ausgestaltung kann auch ein Speichern des Abbruchs und/oder der Verwerfung des Leseergebnisses vorsehen, wenn die zu erfassenden Waren vor Ablauf der vorbestimmten Zeitdauer durch den Eingang wieder aus dem Lesebereich entfernt werden. Das Speichern eines Abbruchs und/oder einer Verwerfung kann bevorzugt dem jeweiligen Nutzerprofil zugeordnet werden.

Gemäß einer weiteren Ausführungsform weist die Leseeinrichtung wenigstens eine Leseeinheit, vorzugsweise eine Mehrzahl von Leseeinheiten auf. Mit einer Mehrzahl von derartigen Leseeinheiten kann eine weiter verbesserte Erfassungssicherheit beziehungsweise eine verbesserte Effizienz im Betrieb erreicht werden. Dabei kann die zumindest eine Leseeinheit als oder mit Antenne ausgebildet sein, insbesondere zur Erfassung von RFID-Transpondern. Solche Leseeinheiten bzw. Antennen sind kostengünstig und mit geringem Aufwand in eine voranstehend erwähnte Tunnelstruktur zu integrieren.

Weiter bevorzugt weist die Erfassungseinrichtung und/oder der Warendurchgang eine Steuerungseinheit und/oder eine Auswerteeinheit auf, sodass eine Reproduzierbarkeit der Lese- und Auswertevorgänge gewährleistet werden kann. Vorzugsweise können in der Steuerungseinheit und/oder Auswerteeinheit die Steuerprofile der Erfassungsverläufe mit einer hohen Erfassungsrate, in Abhängigkeit vom Anwendungsfall, als Referenzmodelle abgespeichert werden. Die Referenzmodelle können u.a. auf den Parametern wie inkrementeller Verfahrensweg, Verfahrensgeschwindigkeit oder Verfahrensgeschwindigkeitsprofil, Antennenauswahl, Modulationsprinzip, Antennentaktung, Antennenleistung, Lesezykluszahl basieren. Es kann hierbei von Vorteil sein, wenn die Steuerungseinheit an eine übergeordnete IT-Struktur, bevorzugt umfassend zumindest eine Datenbank, eingebunden ist. Die Funktionalität der Erfassungsvorrichtung kann hierdurch in geeigneter Weise an den jeweiligen Anwendungsfall angepasst werden. Ferner kann die Steuerungseinheit und/oder die Auswerteeinheit zur Steuerung und/oder Auswertung im Betrieb der Leseeinrichtung und/oder der zumindest einen Begrenzungseinrichtung und/oder der zumindest einen Identifizierungsvorrichtung eingerichtet sein.

Nach einer weiteren Ausgestaltung der Erfassungsvorrichtung ist wenigstens eine Leseeinheit relativ zum Lesebereich beweglich angeordnet, insbesondere automatisiert bewegbar. Dabei kann die Bewegung, d.h. das automatische Verfahren der Leseeinheit längs einer Raumachse, bevorzugt durch die Steuerungseinheit der Erfassungseinrichtung und/oder des Warendurchgangs gesteuert werden. Insbesondere kann die Leseeinheit dazu eingerichtet sein, während eines Lesevorgangs relativ zum Lesebereich bewegt zu werden. Ein gleichzeitiges Verfahren der Leseeinheit hat zur Folge, dass eine optimale zeitliche und räumliche Abdeckung bzw. Feldabdeckung der zu erfassenden Waren vorzugsweise mit Transpondern, im Lesebereich erzielt wird. Gleichzeitig bewirkt das dynamisch veränderliche Antennenfeld das sich durch die Bewegung beim Lesevorgang ergibt, eine bessere Trennung von eng zusammenliegenden Transpondern und die Verschiebung der durch Reflektionen entstandenen Feldauslöschungen. Die Erfassungssicherheit wird somit weiter verbessert.

In bevorzugter Weise kann die wenigstens eine Leseeinheit an einem Träger angeordnet sein, der relativ zum Lesebereich beweglich ist, insbesondere automatisiert bewegbar ist. Die Bewegung kann durch die Steuerungseinheit steuerbar sein. Die Anordnung der Leseeinheit an einem Träger ermöglicht eine konstruktiv einfach zu realisierende Beweglichkeit bei gleichzeitig robustem Aufbau. Ebenso können an einem Träger eine Vielzahl von Leseeinheiten angeordnet werden, wodurch ein etwaiger Steuerungsaufwand reduziert wird.

In besonders bevorzugter Weise ist eine Führungsschiene oder ein Portalschlitten zur automatisierten Bewegung der wenigstens einen Leseeinheit oder für den Träger der Leseeinheit vorgesehen. Eine solche Führungsschiene oder ein Portalschlitten lässt sich mit wenig Aufwand in eine voranstehend beschriebene Tunnelstruktur einbauen und gestattet dabei eine zuverlässige und genaue Führung der jeweiligen Leseeinheit beziehungsweise des jeweiligen Trägers.

Nach einer weiteren Ausgestaltung der Erfassungsvorrichtung erstreckt sich die Führungsschiene oder der Portalschlitten im Wesentlichen entlang der Einfahrts- und/oder Ausfahrtsrichtung des Lesebereichs und/oder des Warendurchgangs. Dabei kann sich der Träger der Leseeinheit im Wesentlichen quer zur Einfahrts- und/oder Ausfahrtsrichtung des Lesebereichs und/oder des Warendurchgangs erstrecken. Auf diese Weise kann die Bewegung des Trägers beziehungsweise der darauf angeordneten Leseeinheiten vorteilhaft an die tatsächliche Position der Waren innerhalb des Lesebereichs angepasst werden.

Weiterhin kann es von Vorteil sein, wenn die wenigstens eine Leseeinheit oberhalb des Lesebereichs angeordnet ist, bevorzugt sämtliche Leseeinheiten oberhalb des Lesebereichs angeordnet sind. Ebenso kann zumindest eine Leseeinheit seitlich des Lesebereichs angeordnet sein. Die Positionierung der wenigstens einen Leseeinheit oberhalb des Lesebereichs lässt sich konstruktiv einfach bewerkstelligen. Zusätzliche Leseeinheiten seitlich des Lesebereichs können die Erfassungsgenauigkeit weiter verbessern.

**In** weiter bevorzugter Ausgestaltung ist der Innenraum des Warendurchgangs und/oder der Lesebereich zur Aufnahme und/oder Positionierung eines standardisierten Transportbehälters und/oder eines Rollcontainers und/oder einer standardisierten Palette und/oder von Stapelware, insbesondere in standardisierten Gebinden, dimensioniert. Die Aufnahmefähigkeit für einen Rollcontainer oder für eine standardisierte Palette erlaubt eine gute Einbindung der Erfassungsvorrichtung in herkömmliche Logistikprozesse, ohne dass aufwändige Handhabungsvorgänge mit den fraglichen Waren erforderlich sind. Insbesondere kann der Warendurchgang oder der Lesebereich von Dienstleistern für die Erfassung von Waren im Zuge der Warenbeschickung des Lagerraums mit nur geringem Handhabungsaufwand genutzt werden.

Weiterhin kann es von Vorteil sein, wenn der Innenraum des Warendurchgangs und/oder der Lesebereich dazu dimensioniert ist, dass bei Positionierung eines standardisierten Transportbehälters oder eines standardisierten Rollcontainers, insbesondere mit der Grundfläche einer Palette, oder einer standardisierten Palette und/oder von Stapelware, insbesondere in standardisierten Gebinden, der Innenraum des Warendurchgangs und/oder der Lesebereich für eine Person unbetretbar ist und/oder zumindest die jeweilige Grundfläche des Innenraums des Warendurchgangs und/oder des Lesebereichs im Wesentlichen vollständig abgedeckt wird. Demgemäß ist es beispielsweise für einen Dienstleister unmöglich, den Warendurchgang oder den Lesebereich zusammen mit einem standardisierten Behälter oder dergleichen zu betreten. Sowohl das Betreten als auch das Verlassen des Raumes muss für einen Dienstleister also durch die Personenvereinzelungsvorrichtung erfolgen. Die Gefahr von Manipulationen wird dadurch weiter verringert.

Gemäß einer weiteren Ausführungsform ist wenigstens ein Sensor zur Erfassung eines innerhalb des Lesebereichs und/oder innerhalb des Innenraums des Warendurchgangs befindlichen Behälters oder einer Palette oder eines Gebindes vorgesehen, insbesondere eine Mehrzahl von Sensoren. Der Betriebsmodus kann dabei vom Vorhandensein eines Behälters oder einer Palette oder eines Gebindes abhängig eingestellt werden. Ferner kann der Sensor zur Erfassung der Größe und/oder Position des Behälters oder der Palette oder des Gebindes eingerichtet sein. Auf diese Weise kann der durch die Leseeinrichtung auszulesende Bereich genau ermittelt und auf den jeweiligen Erfassungsfall angepasst werden. Beispielsweise können hierdurch unnötig weite Verfahrwege der wenigstens einen Leseeinheit vermieden werden. Die Dauer des Lesevorgangs lässt sich somit auf ein geringes Maß reduzieren.

Weiterhin kann es von Vorteil sein, wenn der Lesebereich während eines Lesevorgangs zumindest durch die Tunnelstruktur und/oder durch die Begrenzungsvorrichtung abgeschirmt ist. Eine solche Abschirmung des Lesebereichs hat eine weitere Verkürzung des Lesevorgangs zur Folge, da nur die Transponder erfasst werden müssen, die für den jeweiligen Prozess relevant sind.

In weiterer bevorzugter Ausgestaltung ist im Lagerraum eine Informationsvorrichtung vorgesehen, die zur Bedienung durch einen Nutzer eingerichtet ist, wobei die Informationsvorrichtung bevorzugt zur Kontrolle und/oder Anzeige von Daten einer von einem Lagerplatz entnommenen Ware eingerichtet ist und/oder wobei die Informationsvorrichtung zur Anzeige und/oder Veränderung und/oder Erzeugung von Profildaten und/oder personalisierten Daten eines Nutzers, ins-besondere profilspezifischen Kontingentdaten, eingerichtet ist. Die Anwenderfreundlichkeit der Einrichtung kann hierdurch insgesamt verbessert werden. Die Gefahr von Fehlbedienungen wird verringert.

Weiterhin kann es von Vorteil sein, wenn die Informationsvorrichtung eine Identifizierungsvorrichtung zur Erfassung der Identität einer Person und/oder eine Warenerfassungsvorrichtung für entnommene Waren und/oder eine Anzeigeeinheit und/oder eine Eingabeeinheit aufweist. Nutzer können auf diese Weise einfach und zuverlässig eine persönliche Identifizierung veranlassen und anschließend auf persönliche Daten zugreifen beziehungsweise diese Einsehen. Ebenso können Informationen über entnommene Waren, insbesondere von aus Regalen oder Lagerplätzen entnommenen Waren, gewonnen werden. Dies ist beispielsweise dann relevant, wenn ein Nutzer über die jeweils entnommene Ware im Unklaren ist und zunächst noch verifizieren möchte, ob es sich tatsächlich um die gewünschte Ware mit den jeweils gewünschten Eigenschaften handelt.

Nach einer weiteren bevorzugten Ausgestaltung weist die Informationsvorrichtung eine Steuerungseinheit und/oder Auswerteeinheit auf, die bevorzugt in eine übergeordnete **IT-Struktur,** besonderes bevorzugt umfassend zumindest eine Datenbank, eingebunden ist und/oder wobei die Steuerungseinheit und/oder die Auswerteeinheit zur Steuerung und/oder Auswertung im Betrieb der Informationsvorrichtung eingerichtet ist. Ein zuverlässiger Betrieb der Informationsvorrichtung kann damit sichergestellt werden.

Besonders bevorzugt ist der Lagerraum umschlossen, insbesondere räumlich begrenzt. Die Überwachung des Warenbestandes wird dadurch mit größerer Sicherheit gewährleistet.

Noch weiter bevorzugt ist der Lagerraum als Konsignationslager und/oder Ausgabelager und/oder Zwischenlager eingerichtet, insbesondere für Arbeitsmittel, Gerätebauteile und/oder Wäschestücke. Dabei kann der Lagerraum mit einer Vielzahl von Lagerplätzen und/oder zugehörigen Lagerplatzanzeigen ausgestattet sein. Derartige Lager sind im Betrieb besonders nutzer- und auch betreiberfreundlich.

**In** weiter bevorzugter Ausgestaltung ist der Lagerraum zur statischen (fest definierte Lagerplatzzuordnung) und/oder dynamischen (chaotische Lagerplatzzuordnung) Lagerplatzverwaltung eingerichtet. Die Verwendung von Lagerplätzen für einzelne Warentypen kann insbesondere bei der dynamischen oder chaotischen Lagerplatzverwaltung flexibel an die jeweilige Bestandsstruktur angepasst werden. Eine statische Lagerplatzverwaltung kann mit nur geringem Aufwand bewerkstelligt werden. Der Lagerraum kann ferner eine Indikationsvorrichtung zur Anzeige der Position einzelner Waren innerhalb des Lagerraums aufweisen. Bevorzugt kann die Indikationsvorrichtung zur nutzerspezifischen und/oder temporär begrenzten Indikation von Warenpositionen eingerichtet sein. Das Auffinden von jeweils gewünschten Waren kann somit vereinfacht beziehungsweise beschleunigt werden.

Weiterhin kann es von Vorteil sein, wenn die Indikationsvorrichtung zur Darstellung einer Orientierungsgrafik und/oder eines Bewegungspfades/Navigationspfads, bevorzugt in einem Raumschema und/oder mit Objektkennzeichnung, und/oder zur Darstellung in virtueller Realität und/oder gemischter Realität eingerichtet ist. Auf diese Weise können die jeweils gewünschten/ gesuchten Lagerplatzorte/Lagerplatzpositionen der Waren im Lager dem Nutzer besonders nutzerfreundlich angezeigt werden. Fehlentnahmen aus den Lagerplätzen können so mit hoher Sicherheit vermieden werden. Ebenso ist es möglich, dass die Indikationsvorrichtung zur Erzeugung von Tonsignalen oder optischen Signalen, insbesondere Leucht- und/oder Farbsignalen und/oder Text, insbesondere elektronischen Textanzeigen, eingerichtet ist. Dies kann mit nur geringem apparativem Aufwand bewerkstelligt werden.

**In** besonders bevorzugter Weise kann die Indikationsvorrichtung als Visualisierungseinrichtung ausgebildet sein, weiter bevorzugt als Touchscreen und/oder Tablet-PC (inklusive Kamera) oder als Head-Mounted-Display für virtuelle Realität und/oder gemischte Realität und/oder als optische Lagerplatzanzeige. Derartige Visualisierungseinrichtungen sind kostengünstig anzuschaffen und bieten ein hohes Maß an Funktionalität. Die Indikationsvorrichtung kann weiter bevorzugt als Visualisierungseinrichtung für bildgebende Verfahren eingerichtet sein.

Ferner kann in weiter bevorzugter Ausgestaltung der Lagerraum mit einer Steuerungseinheit und/oder Auswerteeinheit ausgestattet sein, die bevorzugt in eine übergeordnete **IT-Struktur,** besonderes bevorzugt umfassend zumindest eine Datenbank, eingebunden ist und/oder wobei die Steuerungseinheit und/oder die Auswerteeinheit zur Durchführung der Lagerverwaltung und/oder zur Steuerung und/oder Auswertung im Betrieb der Indikationsvorrichtung eingerichtet ist. Die Betriebssicherheit kann somit in ausreichend hohem Maße gewährleistet werden.

Weiter bevorzugt können die Steuerungseinheiten und/oder Auswerteeinheiten der Personenvereinzelungsvorrichtung und/oder des Warendurchgangs und/oder der Informationsvorrichtung und/oder des Lagerraums miteinander vernetzt sein oder als Systemsteuerung integriert ausgebildet sein und/oder in eine übergeordnete IT-Struktur eingebettet sein, die bevorzugt eine Datenbank aufweist, in der besonders bevorzugt Nutzerdaten und/oder Warenbestandsdaten gespeichert sind. Durch Integration oder Vernetzung wird eine besonders hohe Betriebseffizienz beziehungsweise eine vorteilhafte Kommunikation zwischen den einzelnen Funktionseinheiten der Einrichtung ermöglicht, wodurch insgesamt die Sicherheit in der Bestandsüberwachung weiter verbessert werden kann.

Gemäß einem weiteren Aspekt der vorliegenden Erfindung ist eine Lagereinrichtung mit einem Lagerraum zur Lagerung oder Zwischenlagerung von Waren ausgestattet, wobei der Lagerraum zur statischen und/oder dynamischen Lagerplatzverwaltung eingerichtet ist und/oder wobei der Lagerraum eine Indikationsvorrichtung zur Anzeige der Position einzelner Waren innerhalb des Lagerraums aufweist, die bevorzugt zur nutzerspezifischen und/oder temporär begrenzten Indikation von Warenpositionen eingerichtet ist. Eine derartige Lagerreinrichtung ermöglicht eine günstige Ausnutzung des Lagerraums mit gleichzeitig hoher Nutzerfreundlichkeit in Bezug auf die räumliche Auffindbarkeit der jeweils gewünschten Waren. Die voranstehend erwähnten Merkmale zu einem derartigen Lagerraum sollen auch unabhängig von der Einrichtung zur Bestandsüberwachung mit einer Lagerreinrichtung gemäß der vorliegenden Erfindung kombinierbar sein.

Gemäß einem noch weiteren Aspekt der vorliegenden Erfindung wird ein Verfahren zur Bestandsüberwachung von mit Transpondern versehenen Waren offenbart. Bei dem erfindungsgemäßen Verfahren wird ein Lagerraum zur Lagerung oder Zwischenlagerung von Waren von einer Person über eine Personenvereinzelungsvorrichtung betreten und/oder verlassen und Waren werden über einen separat von der Personenvereinzelungsvorrichtung ausgebildeten Warendurchgang in den Lagerraum hinein und aus dem Lagerraum heraus verbracht, wobei die jeweils durch den Warendurchgang in den Lagerraum herein oder aus diesem heraus verbrachten Waren mittels einer Erfassungsvorrichtung erfasst werden. Die jeweils erfassten Waren werden bevorzugt dem Bestand zugerechnet oder von diesem abgezogen. Insbesondere können entnommene Waren dem jeweiligen Nutzerprofil/Nutzerkonto zugeordnet werden. Die voranstehend erwähnten Merkmale der Einrichtung zur Bestandsüberwachung sollen auch unabhängig von der Einrichtung mit dem erfindungsgemäßen Verfahren zur Bestandsüberwachung kombinierbar sein. In einer beispielhaften Ausführung des erfindungsgemäßen Verfahrens sucht der Nutzer, nachdem er das Lager über die Personenvereinzelungsvorrichtung betreten hat, den Lagerplatz der von ihm gewünschten und freigegebenen Ware. Dazu kann er den Tablet-PC (Pad) mit eingebauter Kamera oder das Head-Mounted-Display zur Orientierung im Lager benutzen, indem er mit der Kamera den Raum betrachtet, wobei vorzugsweise gleichzeitig, in das Blickfeld der Kamera kontextbezogene digitale Informationen zur Ware, Lageplatz und Navigationspfad aus der Datenbank über die Steuereinheit hinzugefügt werden.

Ein weiterer Aspekt der vorliegenden Erfindung betrifft ein Verfahren zur Bulk-Erfassung von Waren, bei dem eine Vielzahl von mit Transpondern versehenen Waren in einem Lesebereich einer Erfassungsvorrichtung positioniert wird, bei dem wenigstens eine Leseeinrichtung die Transponder der Waren berührungslos identifiziert, bei dem ein Ausgang für innerhalb des Lesebereichs befindliche Waren zumindest während des Lesevorgangs durch eine Begrenzungseinrichtung begrenzt wird und bei dem die Begrenzungseinrichtung den Ausgang des Lesebereichs erst nach Ablauf einer vorbestimmten Zeitdauer nach Beginn eines jeweiligen Lesevorgangs der Leseeinrichtung freigibt.

Durch ein erfindungsgemäßes Verfahren kann, wie auch in Bezug auf die voranstehend beschriebene Erfassungsvorrichtung beschrieben worden ist, vermieden werden, dass die jeweils zu erfassenden Waren zu früh aus dem Lesebereich entfernt werden und so eine nur unzureichende beziehungsweise unvollständige Erfassung erfolgt. Die Begrenzung des Ausgangs während der jeweils vorbestimmten Zeitdauer kann eine vollständige Erfassung sämtlicher Waren beziehungsweise der an den Waren angeordneten Transpondern mit erhöhter Sicherheit gewährleisten. Die Fehlerquote bei der Bulk-Erfassung von Waren lässt sich durch ein solches Verfahren signifikant verringern, sodass Zeit und Kosten eingespart werden können. Ein erfindungsgemäßes Verfahren zur Bulk-Erfassung von Waren kann in besonders vorteilhafter Weise mit einer voranstehend beschriebenen Erfassungsvorrichtung durchgeführt werden.

Weitere Ausgestaltungen der vorliegenden Erfindung ergeben sich aus Kombinationen der in den Ansprüchen, der Beschreibung sowie den Figuren offenbarten Merkmale. Die vorliegende Erfindung wird nachfolgend anhand von Ausführungsbeispielen und zugehörigen Zeichnungen erläutert.

### Kurze Beschreibung der Figuren

Es zeigen:
- Figur 1: eine Einrichtung zur Bestandsüberwachung gemäß einem Ausführungsbeispiel der vorliegenden Erfindung in schematischer Draufsicht.
- Figur 2: eine Einrichtung zur Bestandsüberwachung gemäß einem weiteren Ausführungsbeispiel der vorliegenden Erfindung in schematischer Draufsicht.
- Figur 3: eine Erfassungsvorrichtung gemäß einem Ausführungsbeispiel der vorliegenden Erfindung in schematischer Perspektivansicht.
- Figur 4: eine Anordnung von Leseeinheiten einer Erfassungsvorrichtung gemäß einem Ausführungsbeispiel der vorliegenden Erfindung in schematischer Perspektivansicht.

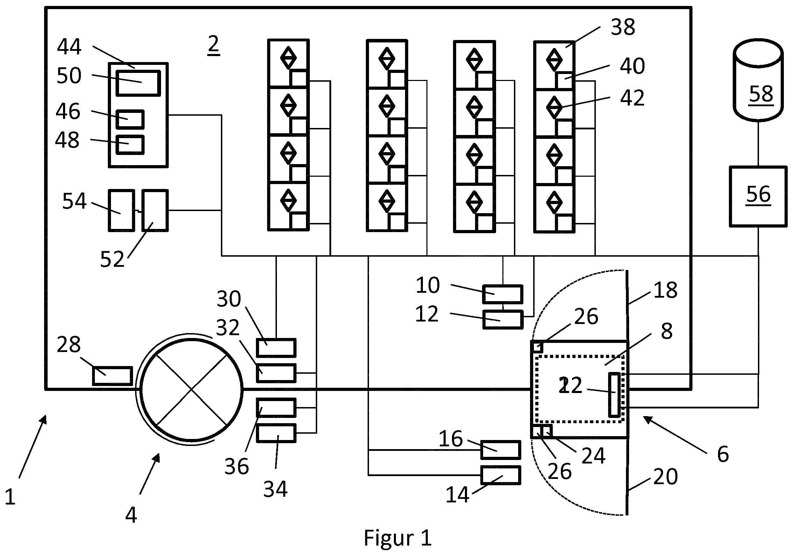

Die Figur 1 zeigt eine Einrichtung zur Bestandsüberwachung 1 gemäß einem Ausführungsbeispiel der vorliegenden Erfindung in schematischer Draufsicht. Die Einrichtung zur Bestandsüberwachung 1 weist einen Lagerraum 2 zur Lagerung oder Zwischenlagerung von Waren, eine Personenvereinzelungsvorrichtung 4, über die der Lagerraum 2 von einer Person betreten und/oder verlassen werden kann, und einen Warendurchgang 6 auf, über den Waren in den Lagerraum 2 hinein und/oder aus dem Lagerraum 2 heraus verbracht werden können. Die Personenvereinzelungsvorrichtung 4 und der Warendurchgang 6 sind separat ausgebildet.

Der Warendurchgang 6 weist zumindest eine Erfassungsvorrichtung 8 auf, die zur Erfassung von mit Transpondern versehenen Waren eingerichtet ist. Hierbei handelt es sich beispielsweise um eine beweglich angeordnete RFID-Leseeinheit. Der Warendurchgang 6 weist ferner innerhalb des Lagerraums 2 eine Anzeigeeinrichtung 10 sowie eine Identifikationsvorrichtung 12 zur Identifikation von Personen auf. Die Anzeigeeinrichtung 10 kann beispielsweise Betriebszustände und/oder Erkennungsergebnisse anzeigen. Ebenso weist der Warendurchgang 6 außenraumseitig eine Anzeigeeinrichtung 14 sowie eine Identifikationsvorrichtung 16 zur Identifikation von Personen auf.

Der Warendurchgang 6 weist ferner eine lagerraumseitige Begrenzungseinrichtung 18 sowie eine außenraumseitige Begrenzungseinrichtung 20 auf. Durch die lagerraumseitige Begrenzungseinrichtung 18 sowie die außenraumseitige Begrenzungseinrichtung 20 ist der Warendurchgang als Schleuse ausgebildet. Die Begrenzungseinrichtungen können beispielsweise als Türen ausgestaltet sein. Ferner kann der Warendurchgang 6 mit einem Sensor 22 ausgestattet sein, der zur Erfassung eines innerhalb eines Lesebereichs der Erfassungsvorrichtung 8 und/oder innerhalb des Innenraums des Warendurchgangs 6 befindlichen Behälters oder einer Palette oder eines Gebindes konfiguriert ist. Es kann sich bei dem Sensor 22 insbesondere um einen Transportwagensensor handeln. Innerhalb des Warendurchgangs 6 kann ferner eine Notentriegelung 24 vorgesehen sein. Schließlich kann auch eine außenseitige und/oder lagerraumseitige Verriegelungsvorrichtung 26 vorgesehen sein, insbesondere für beide Begrenzungseinrichtung 18 und 20.

Die Personenvereinzelungsvorrichtung 4 ist bevorzugt als Drehkreuz in hoher Ausführung ausgebildet, insbesondere in unübersteigbarer Ausgestaltung. Die Personenvereinzelungsvorrichtung 4 kann mit einer Notentriegelung ausgestattet sein. Die Personenvereinzelungsvorrichtung 4 weist eine Warenerfassungsvorrichtung 28 für mitgeführte Waren auf, insbesondere für mit einem Transponder versehene Waren. Hierbei handelt es sich beispielsweise um eine RFID-Leseeinheit. Die Warenerfassungsvorrichtung kann auch außerhalb des Innenraums der Personenvereinzelungsvorrichtung angeordnet sein. Die Personenvereinzelungsvorrichtung 4 weist ferner innerhalb des Lagerraums 2 eine Anzeigeeinrichtung 30 sowie eine Identifikationsvorrichtung 32 zur Identifikation von Personen auf. Die Anzeigeeinrichtung 30 kann beispielsweise Betriebszustände und/oder Erkennungsergebnisse anzeigen. Ebenso weist die Personenvereinzelungsvorrichtung 4 außenraumseitig eine Anzeigeeinrichtung 34 sowie eine Identifikationsvorrichtung 36 zur Identifikation von Personen auf.

Der Lagerraum 2 weist eine Vielzahl von Lagerplätzen 38 auf, die beispielsweise in Regalen vorgesehen sind. Jeder Lagerplatz 38 innerhalb eines Regals kann mit einer Lagerplatzanzeige 40 ausgestattet sein. Auf den Lagerplätzen 38 können Waren 42 mit Transpondern, insbesondere mit RFID-Transpondern, bis zur jeweils gewünschten Entnahme durch einen Nutzer gelagert oder zwischengelagert werden.

Ferner kann im Lagerraum 2 eine Informationsvorrichtung 44 vorgesehen sein, die zur Bedienung durch einen Nutzer eingerichtet ist, wobei die Informationsvorrichtung 44 bevorzugt zur Kontrolle und/oder Anzeige von Daten einer von einem Lagerplatz 38 entnommenen Ware 42 eingerichtet ist. Die Informationsvorrichtung 44 kann zur Anzeige und/oder Veränderung und/oder Erzeugung von Profildaten und/oder personalisierten Daten eines Nutzers, insbesondere profilspezifischen Kontingentdaten, eingerichtet sein. Hierzu kann die Informationsvorrichtung 44 eine Identifizierungsvorrichtung 46 zur Erfassung der Identität einer Person und/oder eine Warenerfassungsvorrichtung 48 für entnommene Waren und/oder eine Anzeigeeinheit 50 und/oder eine Eingabeeinheit aufweisen. Die Warenerfassungsvorrichtung 48 kann als Tischleser ausgebildet sein.

Schließlich kann innerhalb des Lagerraums 2 eine Indikationsvorrichtung 52 vorgesehen sein, die zur Darstellung einer Orientierungsgrafik und/oder eines Bewegungspfades, bevorzugt in einem Raumschema und/oder mit Objektkennzeichnung, und/oder zur Darstellung virtueller Realität und/oder gemischter Realität eingerichtet ist und/oder wobei die Indikationsvorrichtung zur Erzeugung von Tonsignalen oder optischen Signalen, insbesondere Leucht- und/oder Farbsignalen und/oder Text, insbesondere elektronischen Textanzeigen, eingerichtet ist. Die Indikationsvorrichtung 52 kann als Visualisierungseinrichtung ausgebildet sein, beispielsweise als Touchscreen und/oder Tablet-PC oder als Head-Mounted-Display für virtuelle Realität und/oder gemischte Realität und/oder als optische Lagerplatzanzeige. Die Indikationsvorrichtung 52 kann ferner als Visualisierungseinrichtung für bildgebende Verfahren eingerichtet sein. Durch eine derartige Indikationsvorrichtung 52 kann das Auffinden von Waren 42 innerhalb des Lagerraums vereinfacht werden.

Ferner kann innerhalb des Lagerraums ein RFID Handleser 54 vorgesehen sein. Der RFID Handleser 54 kann zur Identifikation von Waren 42 unmittelbar am Lagerplatz 38 eingesetzt werden, wodurch die Nutzerfreundlichkeit der Einrichtung verbessert wird. Der RFID Handleser 54 ist demnach innerhalb des Lagerraums 2 durch eine Person bewegbar, insbesondere mitführbar.

Die Einrichtung 1 weist ferner eine Steuerungs- und/oder Auswerteeinheit 56 auf. Die Steuerungs- und/oder Auswerteeinheit 56 ist bevorzugt mit einer Datenbank 58 verbunden, die ebenfalls Teil der Einrichtung 1 ist oder sein kann. Die Steuerungs- und/oder Auswerteeinheit 56 kann zur Steuerung sämtlicher Einrichtungen, Vorrichtungen oder Funktionskomponenten innerhalb der Einrichtung 1 und/oder zur Auswertung sämtlicher Prozesse, beispielsweise von Erfassungs- und/oder Erkennungsvorgängen, innerhalb der Einrichtung 1 eingerichtet sein. Insbesondere kann die Steuerungs- und/oder Auswerteeinheit 56 zur Steuerung der Personenvereinzelungsvorrichtung 4, des Warendurchgangs 6, der Informationsvorrichtung 44 und/oder der Indikationsvorrichtung 52 und/oder zur Auswertung der Vorgänge in diesen Vorrichtungen ausgebildet sein. Ebenso kann die Steuerungs- und/oder Auswerteeinheit 56 zur Durchführung der Lagerplatzverwaltung eingerichtet sein. Die Datenbank 58 kann Informationen zum Warenbestand sowie personenspezifische Daten von Nutzern, insbesondere Kontingentdaten von Nutzern, enthalten, die im Betrieb der Einrichtung 1 laufend aktualisiert werden.

Der Lagerraum 2 der Einrichtung 1 kann ausschließlich über die Personenvereinzelungsvorrichtung 4 betreten werden. Nutzer der Einrichtung 1 verlassen nach der Entnahme von Waren 42 den Lagerraum 2 ausschließlich über den Warendurchgang 6, wodurch eine sichere Warenerfassung gewährleistet wird. Dienstleister nutzen den Warendurchgang 6 für das Einbringen von Waren 42 in den Lagerraum 2 hinein, beispielsweise über einen standardisierten Warenbehälter. Das Betreten des Lagerraums 2 durch Dienstleister erfolgt jedoch ebenfalls über die Personenvereinzelungsvorrichtung 4. Zudem verlassen Dienstleister den Lagerraum 2 über die Personenvereinzelungsvorrichtung 4, nicht über den Warendurchgang 6. Demnach identifizieren sich Dienstleister am Warendurchgang 6, positionieren die jeweils einzubringenden Waren 42 im Warendurchgang 6. Anschließend erfolgt die Warenerfassung innerhalb des Warendurchgangs 6. Währenddessen kann sich der Dienstleister an der Personenvereinzelungsvorrichtung 4 identifizieren und den Lagerraum 2 betreten. Nach der Warenerfassung im Warendurchgang 6 kann der Dienstleister die Waren 42 lagerraumseitig wieder aus dem Warendurchgang 6 entnehmen. Der Dienstleister verlässt den Lagerraum 2 über die Personenvereinzelungsvorrichtung 4.

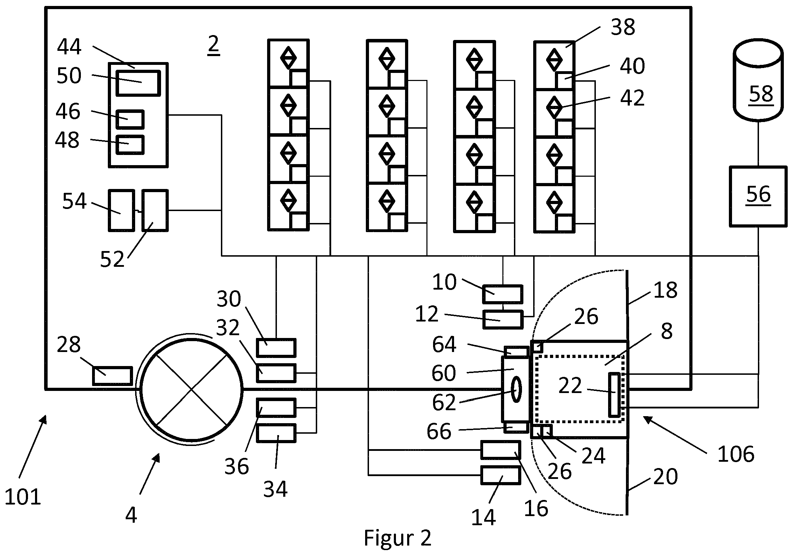

Die Figur 2 zeigt eine Einrichtung zur Bestandsüberwachung 101 gemäß einem weiteren Ausführungsbeispiel der vorliegenden Erfindung in schematischer Draufsicht. In diesem Ausführungsbeispiel unterscheidet sich lediglich der Warendurchgang 106, gegenüber dem Warendurchgang 6 der ersten Ausführungsform.

Der Warendurchgang 106 ist zusätzlich mit einem Warentunnel 60 ausgestattet. Der Warentunnel kann mit einer Warenfördereinrichtung ausgestattet sein, sodass die im Warentunnel 60 positionierten Waren 42 automatisiert innerhalb des Warentunnels 60 befördert werden. Ebenso kann der Warentunnel 60 beispielsweise als mechanisch und/oder elektrisch gekoppelte Schubladevorrichtung, Klappmuldenvorrichtung und/oder als Bandförderer ausgebildet sein.

Der Warentunnel 60 kann innerhalb der Schleuse des Warendurchgangs 106 oder separat von dieser angeordnet sein. Der Warendurchgang 106 kann eine Erfassungseinrichtung 62 mit einer Lesetechnik zur Erfassung von Waren 42 innerhalb des Warentunnels 60 aufweisen. Ebenso kann der Warendurchgang 106 eine Erfassungseinrichtung 8 zur Erfassung von Waren innerhalb der Schleuse aufweisen. Bevorzugt ist eine Mehrzahl von Erfassungseinrichtungen 8 und 62 vorgesehen, bevorzugt zumindest eine Erfassungseinrichtung 8 zur Erfassung von Waren innerhalb der Schleuse und/oder zumindest eine Erfassungseinrichtung 62 zur Erfassung von Waren innerhalb des Warentunnels 60. Die Erfassungseinrichtung 62 des Warentunnels 60 kann dazu eingerichtet sein, die von einem Nutzer entnommenen und erfassten Waren vom Gesamtbestand abzuziehen und dem jeweiligen Profil des Nutzers zuzuordnen. Die Erfassungseinrichtung 8 der Schleuse kann dazu eingerichtet sein, bei Erfassung von durch Personen mitgeführten Waren 42, insbesondere Einzelobjekten, das Passieren der Schleuse durch eine Person aus dem Lagerraum 2 heraus zu blockieren.

Der Warentunnel 60 kann jeweils einen elektrisch betriebenen Verschluss auf der Beschickungsseite 64 und auf der Entnahmeseite 66 aufweisen. Die Beschickungsseite 64 befindet sich im Lagerraum 2 beziehungsweise lagerraumseitig. Die Beschickungsseite 64 wird nach der Identifikation des jeweiligen Nutzers an der Identifikationsvorrichtung 12 an der lagerraumseitigen Begrenzungseinrichtung 18 geöffnet. Die im Lagerraum 2 entnommene Ware 42 kann in die Beschickungsseite 64 des Warentunnels 60 eingelegt werden und die Schleuse kann anschließend betreten werden. Die Erfassungseinrichtung 8 im Inneren der Schleuse ist in dieser Ausgestaltung bevorzugt zur Überprüfung eingerichtet, dass keine Artikel mit durch die Schleuse genommen werden. Nach erfolgreichem Scannen des Nutzers durch die Erfassungseinrichtung 8 im Inneren der Schleuse kann der Nutzer die Schleuse verlassen und die Entnahmeseite 66 des Warentunnels 60 öffnen. Die durch den Warentunnel 60 erfasste Ware 42 kann auf der Entnahmeseite entnommen werden. Die im Warentunnel 60 durch die Lesetechnik 62 erfasste Ware 42 wird dem Profil des Nutzers in der Datenbank 58 über die Steuerungs- und/oder Auswertevorrichtung 56 als aus dem Lagerraum 2 entnommene Ware 42 hinzugebucht.

Vorteilhaft an der Ausführungsform mit dem Warentunnel 60 ist, dass Nutzer am unmittelbaren Mitführen von Waren 42 durch die Schleuse gehindert werden. Die Gefahr von nicht erfassten Waren 42, beispielsweise durch an den Körper des Nutzers gepresst und evtl. zusätzlich mit den Armen umschlossenen Waren 42, wird verringert. Hingegen reicht in dieser Ausführungsform die Erkennung einer einzelnen Ware 42 innerhalb der Schleuse aus, um den Nutzer am Verlassen der Schleuse des Warendurchgangs 106 zu hindern. Die Schleuse dient hier als Diebstahlsicherung. Hierfür ist nicht entscheidend, dass sämtliche am Körper des Nutzers mitgeführte Waren erkannt werden.

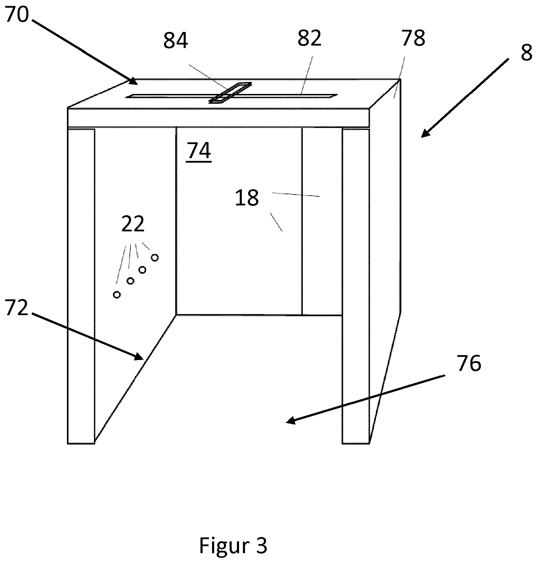

Die Figur 3 zeigt eine Erfassungsvorrichtung gemäß einem Ausführungsbeispiel der vorliegenden Erfindung in schematischer Perspektivansicht. Die Erfassungsvorrichtung ist vorzugsweise für die Bulk-Erfassung von mit Transpondern versehenen Waren ausgebildet. Ebenso kann die Erfassungsvorrichtung zur Einzelerfassung von Waren ausgebildet sein. Es kann sich bei der in der Figur 3 gezeigten Vorrichtung um eine Erfassungsvorrichtung 8 für einen Warendurchgang 6 gemäß des Ausführungsbeispiels in Figur 1 handeln. Ebenso kann es sich bei der in der Figur 3 gezeigten Vorrichtung um eine Erfassungsvorrichtung 8 für einen Warendurchgang 106 gemäß des Ausführungsbeispiels in Figur 2 handeln. Demnach kann es sich um eine Erfassungsvorrichtung 8 für die Schleuse des Warendurchgangs handeln.

Die Erfassungsvorrichtung 8 weist wenigstens eine Leseeinrichtung 70 zur berührungslosen Identifikation von Transpondern auf. Ferner ist die Erfassungsvorrichtung 8 mit einem Lesebereich 72 ausgestattet, der zumindest abschnittsweise innerhalb der Reichweite der Leseeinrichtung 70 angeordnet ist und in dem Waren zur Bulk-Erfassung angeordnet werden können. Ebenso können Waren zur Einzelerfassung im Lesebereich 72 angeordnet werden. Weiterhin ist ein Ausgang 74 für innerhalb des Lesebereichs 72 befindliche Waren 42 vorgesehen. Schließlich weist die Erfassungseinrichtung 8 eine lagerseitige Begrenzungseinrichtung 18 zum temporären Begrenzen des Ausgangs 74 in den Lagerraum 2 auf. Die Begrenzungseinrichtung 18 ist dazu eingerichtet, den Ausgang 74 des Lesebereichs 72 erst nach Ablauf einer vorbestimmten Zeitdauer nach Beginn eines jeweiligen Lesevorgangs freizugeben. Eine in Figur 3 nicht gezeigte außenraumseitige Begrenzungseinrichtung 20 kann dazu eingerichtet sein, den außenraumseitigen Ausgang 76 des Lesebereichs 72 erst nach Ablauf einer vorbestimmten Zeitdauer nach Beginn eines jeweiligen Lesevorgangs freizugeben.

Der Lesebereich 72 wird, wie in der Figur 3 gezeigt, wenigstens abschnittsweise durch eine Tunnelstruktur 78 begrenzt, die beispielsweise raum- oder personenhoch ausgebildet ist, insbesondere für das Passieren im aufrechten Gang. Gemäß der Darstellung in der Figur 3 sind Ausgang und Eingang des Lesebereichs 72 getrennt voneinander ausgebildet, insbesondere an gegenüberliegenden Seiten des Lesebereichs 72 angeordnet. Die Begrenzungseinrichtungen 18 oder 20 können als Ausgangstür, -gitter oder -schranke ausgebildet sein, die bevorzugt verschiebbar, schwenkbar und/oder rollbar ist. Die Begrenzungseinrichtungen 18 und 20 können auch jeweils mehrteilig ausgeführt sein, insbesondere durch Anordnung einer Mehrzahl von Türen oder dergleichen.

Weiterhin können die Begrenzungseinrichtungen 18 und 20 während eines Lesevorgangs und/oder vor Ablauf der vorbestimmten Zeitdauer passierbar sein, insbesondere durch einen Nutzer aktiv geöffnet werden. Ebenso können die Begrenzungseinrichtungen 18 und 20 als Sperreinrichtung zum temporären Verschließen des jeweiligen Ausgangs 74 und 76 ausgebildet sein, wobei hier beispielsweise eine Notentriegelung erfolgen kann.

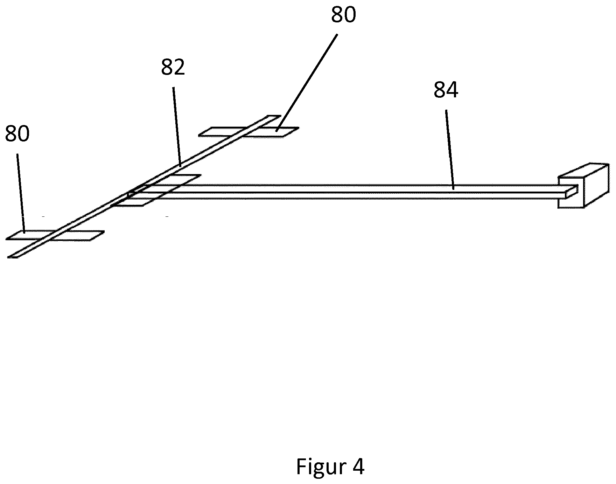

Wie der Figur 4 entnommen werden kann, weist die Leseeinrichtung 70 wenigstens eine Leseeinheit 80, vorzugsweise eine Mehrzahl von Leseeinheiten 80 auf. Die Leseeinheiten 80 können als Antenne ausgebildet sein, insbesondere zur Erfassung von RFID-Transpondern. Die Leseeinheiten 80 können ferner an einem Träger 82 angeordnet sein, der relativ zum Lesebereich 72 beweglich, insbesondere automatisiert bewegbar angeordnet ist. Der Träger 82 kann vorteilhaft an einer Führungsschiene oder einem Portalschlitten 84 zur automatisierten Bewegung angeordnet sein. Die Führungsschiene oder der Portalschlitten 84 erstreckt sich im Wesentlichen entlang der Einfahrts- und/oder Ausfahrtsrichtung des Lesebereichs 72 und der Träger 82 der Leseeinheit 80 erstreckt sich im Wesentlichen quer zur Einfahrts- und/oder Ausfahrtsrichtung des Lesebereichs 72. Ebenso kann sich die Führungsschiene oder der Portalschlitten 84 im Wesentlichen quer zur Einfahrts- und/oder Ausfahrtsrichtung des Lesebereichs 72 erstrecken und der Träger 82 der Leseeinheit 80 kann sich im Wesentlichen entlang der Einfahrts- und/oder Ausfahrtsrichtung des Lesebereichs 4 erstrecken.

An der Tunnelstruktur 78 kann ferner wenigstens der Sensor 22 zur Erfassung der Größe und/oder Position eines innerhalb des Lesebereichs 72 befindlichen Behälters oder einer Palette vorgesehen sein, insbesondere eine Mehrzahl von Sensoren 22. Der Verfahrweg der Leseeinheiten 80 kann in Abhängigkeit von Sensordaten begrenzt werden.

Im Betrieb der Erfassungsvorrichtung 8 wird beispielsweise ein Container oder eine Palette mit Waren in den Lesebereich der Erfassungseinrichtung gefahren. Anschließend wird ein Lesevorgang der Leseeinheiten 80 initiiert, wobei gleichzeitig eine Bewegung der Leseeinheiten 80 über die Portalbahn 84 erfolgt. Um die Lesevorgangsdauer zu verbessern, kann weiterhin die Geschwindigkeit der Antennenbewegung nach Auswertung eines ersten Leseergebnisses durch die Steuerungseinheit an die Anzahl der zu scannenden Artikel angepasst werden. Nach der vorbestimmten Zeitdauer wird die Begrenzungseinrichtung 18 oder 20 von der Steuerungseinheit geöffnet und die Palette oder der Container kann den Lesebereich 72 verlassen.

Die Erfassungsvorrichtung 62 für den Warentunnel 60 kann analog der voranstehend beschriebenen Erfassungsvorrichtung 8 für eine Schleuse ausgebildet sein. In diesem Fall sind am lagerraumseitigen Ausgang 64 sowie am außenraumseitigen Ausgang 66 jeweils Begrenzungseinrichtungen vorgesehen. Diese werden für die Dauer eines Erfassungsvorgangs jeweils verschlossen. Während der Erfassung können die jeweils in dem Warentunnel 60 positionierten Waren 42 relativ zu den Leseeinheiten bewegt werden, entweder durch Bewegung der Leseeinheiten und/oder durch Bewegung der Waren, beispielsweise durch eine Bandfördereinrichtung. Die Erfassungsvorrichtung 62 für den Warentunnel kann eine Tunnelstruktur aufweisen, die kleinere Abmessungen aufweist als die Schleuse des Warendurchgangs.

Eine erfindungsgemäße Einrichtung zur Bestandsüberwachung kann beispielsweise im Gesundheitswesen, in der Medizintechnik sowie in der industriellen Produktion eingesetzt werden.

Weitere Aspekte der vorliegenden Erfindung werden nachfolgend erörtert.

Ein weiterer, erster unabhängiger Aspekt der vorliegenden Erfindung betrifft eine Einrichtung zur Bestandsüberwachung (1, 101), insbesondere von mit Transpondern versehenen Waren (42), mit einem Lagerraum (2) zur Lagerung oder Zwischenlagerung von Waren (42), mit einer Personenvereinzelungsvorrichtung (4), über die der Lagerraum (2) von einer Person betreten und/oder verlassen werden kann, und mit einem Warendurchgang (6), über den Waren (42) in den Lagerraum (2) hinein und/oder aus dem Lagerraum (2) heraus verbracht werden können, wobei der Warendurchgang (6) zumindest eine Erfassungsvorrichtung (8) aufweist, die zur Erfassung von mit Transpondern versehenen Waren (42) eingerichtet ist und wobei die Personenvereinzelungsvorrichtung (4) und der Warendurchgang (6) separat ausgebildet sind.

Ein zweiter Aspekt betrifft eine Einrichtung zur Bestandsüberwachung nach dem vorstehenden Aspekt, wobei die Personenvereinzelungsvorrichtung (4) zumindest eine Identifizierungsvorrichtung (12, 16) zur Erfassung der Identität einer Person aufweist, wobei die Identifizierungsvorrichtung (12, 16) außerhalb des Lagerraums (2) angeordnet ist und/oder wobei eine Identifizierungsvorrichtung (12, 16) innerhalb des Lagerraums (2) angeordnet ist und/oder wobei die Personenvereinzelungsvorrichtung (4) dazu eingerichtet ist, das Passieren einer Person in Abhängigkeit der festgestellten Personenidentität freizugeben und/oder zu blockieren, und/oder wobei die Identifizierungsvorrichtung (12, 16) das Betreten des Lagerraumes (2) eines Nutzers und/oder eines Dienstleisters erfasst und/oder zur differenzierten Erfassung zwischen Nutzer und Dienstleister eingerichtet ist und/oder wobei die Identifizierungsvorrichtung (12, 16) zur Identifikation mittels eines Codes, einer **PIN** oder biometrischer Informationen, bevorzugt mittels Iris-, Handflächen und/oder Fingerabdruckscan, eingerichtet ist.

Ein dritter Aspekt betrifft eine Einrichtung zur Bestandsüberwachung nach den vorstehenden Aspekten, wobei die Personenvereinzelungsvorrichtung (4) eine Warenerfassungsvorrichtung (28) für mitgeführte Waren (42) aufweist, insbesondere mit einem Transponder versehene Waren (42), wobei die Personenvereinzelungsvorrichtung (4) bevorzugt dazu eingerichtet ist, das Passieren einer Person bei Erfassung unberechtigt mitgeführter Waren (42) zu blockieren und/oder das Passieren einer Person freizugeben, sofern keine Waren (42), keine unberechtigt mitgeführten Waren (42) und/oder lediglich berechtigt mitgeführte Waren (42) erfasst werden, und/oder wobei die Warenerfassungsvorrichtung (28) der Personenvereinzelungsvorrichtung (4) als RFID-Leseeinrichtung ausgebildet ist, bevorzugt mindestens als **UHF** RFID-Leseeinrichtung.

Ein vierter Aspekt betrifft eine Einrichtung zur Bestandsüberwachung nach den vorstehenden Aspekten, wobei der Warendurchgang (6) zumindest eine Identifizierungsvorrichtung (12, 16) zur Erfassung der Identität einer Person aufweist, wobei die Identifizierungsvorrichtung (12, 16) außerhalb des Lagerraums (2) angeordnet ist und/oder wobei eine Identifizierungsvorrichtung (12, 16) innerhalb des Lagerraums (2) angeordnet ist und/oder wobei der Warendurchgang (6) dazu eingerichtet ist, das Passieren einer Person in Abhängigkeit der festgestellten Personenidentität freizugeben und/oder zu blockieren, und/oder wobei die Identifizierungsvorrichtung (12, 16) dazu eingerichtet ist, das Verlassen des Lagerraumes (2) durch einen Nutzer zu erfassen und/oder das Verlassen des Lagerraums (2) durch einen Dienstleister durch den Warendurchgang zu blockieren.

Ein fünfter Aspekt betrifft eine Einrichtung zur Bestandsüberwachung nach den vorstehenden Aspekten, wobei der Warendurchgang (6) zumindest eine Begrenzungseinrichtung (18, 20) aufweist, wobei bevorzugt eine Begrenzungseinrichtung (18, 20) lagerraumseitig und eine weitere Begrenzungseinrichtung (18, 20) außenraumseitig vorgesehen ist und/oder wobei die Begrenzungseinrichtung (18, 20) zum temporären Begrenzen eines lagerraumseitigen Ausgangs (74, 76) aus dem Warendurchgang (6) und/oder eines außenraumseitigen Ausgangs (74, 76) aus dem Warendurchgang (6) und/oder zum temporären Begrenzen der Position von Waren (42) innerhalb des Warendurchgangs (6) ausgebildet ist.

Ein sechster Aspekt betrifft eine Einrichtung zur Bestandsüberwachung nach den vorstehenden Aspekten, wobei die Erfassungsvorrichtung (8) dazu eingerichtet ist, die von einem Nutzer entnommenen und erfassten Waren (42) vom Gesamtbestand abzuziehen und dem jeweiligen Profil des Nutzers zuzuordnen, und/oder die von einem Dienstleister durch den Warendurchgang (6) in den Lagerraum (2) verbrachten und erfassten Waren (42) dem Gesamtbestand zuzuordnen.

Ein siebter Aspekt betrifft eine Einrichtung zur Bestandsüberwachung nach den vorstehenden Aspekten, wobei die vorbestimmte Zeitdauer der jeweiligen Lesevorgangsdauer entspricht oder länger bemessen ist und/oder wobei die vorbestimmte Zeitdauer und/oder die Lesevorgangsdauer und/oder -geschwindigkeit in Abhängigkeit der Warenmenge und/oder des Warenvolumens und/oder des Warentyps und/oder der Packungsdichte und/oder des Warenbehältnisses und/oder der Transpondertypen/Transponderperformance und/oder der jeweils eingestellten Betriebsmodi, insbesondere einem Betriebsmodus zur Bulk-Erfassung und/oder einem Betriebsmodus zur Erfassung von durch Personen mitgeführten Waren (42), einstellbar ist/sind.

Ein achter Aspekt betrifft eine Einrichtung zur Bestandsüberwachung nach den vorstehenden Aspekten, wobei die vorbestimmte Zeitdauer und/oder die Lesevorgangsdauer auf Grundlage empirischer Versuchsdaten voreingestellt ist/sind, ins-besondere empirischer Versuchsdaten unter Berücksichtigung der Warenmenge und/oder des Warenvolumens und/oder des Warentyps und/oder der Packungsdichte und/oder des Warenbehältnisses und/oder der Transpondertypen/Transponderperformance und/oder der jeweiligen Betriebsmodi, insbesondere einem Betriebsmodus zur Bulk-Erfassung und/oder einem Betriebsmodus zur Erfassung von durch Personen mitgeführten Waren (42).

Ein neunter Aspekt betrifft eine Einrichtung zur Bestandsüberwachung nach den vorstehenden Aspekten, wobei die Leseeinrichtung (70) wenigstens eine Leseeinheit, vorzugsweise eine Mehrzahl von Leseeinheiten aufweist und/oder wobei die zumindest eine Leseeinheit als oder mit Antenne ausgebildet und im Lesebereich (72) beweglich, insbesondere automatisiert bewegbar, angeordnet ist, wobei die Bewegung über eine Linearantriebseinheit durchgeführt werden kann.

Ein zehnter Aspekt betrifft eine Einrichtung zur Bestandsüberwachung nach den vorstehenden Aspekten, wobei im Lagerraum (2) eine Informationsvorrichtung (44) vorgesehen ist, die zur Bedienung durch einen Nutzer eingerichtet ist, wobei die Informationsvorrichtung (44) vorzugsweise zur Kontrolle und/oder Anzeige von Daten einer von einem Lagerplatz (38) entnommenen Ware eingerichtet ist und/oder wobei die Informationsvorrichtung (44) zur Anzeige und/oder Veränderung und/oder Erzeugung von Profildaten und/oder personalisierten Daten eines Nutzers, insbesondere profilspezifischen Kontingentdaten eingerichtet ist.

Ein elfter Aspekt betrifft eine Einrichtung zur Bestandsüberwachung nach den vorstehenden Aspekten, wobei der Lagerraum (2) als Konsignationslager und/oder Ausgabelager und/oder Zwischenlager eingerichtet ist, insbesondere für Arbeitsmittel, Gerätebauteile und/oder Wäschestücke, und/oder wobei der Lagerraum (2) mit einer Vielzahl von Lagerplätzen (38) und/oder zugehörigen Lagerplatzanzeigen (40) ausgestattet ist.

Ein zwölfter Aspekt betrifft eine Einrichtung zur Bestandsüberwachung nach den vorstehenden Aspekten, wobei der Lagerraum (2) zur statischen und/oder dynamischen Lagerplatzverwaltung eingerichtet ist und/oder wobei der Lagerraum (2) eine Indikationsvorrichtung (52) zur Anzeige der Ortsposition einzelner Waren (42) innerhalb des Lagerraums (2) aufweist, die bevorzugt zur nutzerspezifischen und/oder temporär begrenzten Indikation von Warenpositionen eingerichtet ist. wobei die Indikationsvorrichtung (52) vorzugsweise zur Darstellung einer Orientierungsgrafik und/oder eines Bewegungspfades, bevorzugt in einem Raumschema und/oder mit Objektkennzeichnung, und/oder zur Darstellung virtueller Realität und/oder gemischter Realität eingerichtet ist und/oder wobei die Indikationsvorrichtung (52) zur Erzeugung von Tonsignalen oder optischen Signalen, insbesondere Leucht- und/oder Farbsignalen und/oder Text, insbesondere elektronischen Textanzeigen, eingerichtet ist, wobei die Indikationsvorrichtung (52) besonders bevorzugt als Visualisierungseinrichtung ausgebildet ist, bevorzugt als Touchscreen und/oder Tablet-PC oder als Head-Mounted-Display für virtuelle Realität und/oder gemischte Realität und/oder als optische Lagerplatzanzeige, und/oder wobei die Indikationsvorrichtung (52) als Visualisierungseinrichtung für bildgebende Verfahren eingerichtet ist.

Ein dreizehnter Aspekt betrifft eine Einrichtung zur Bestandsüberwachung nach den vorstehenden Aspekten, wobei der Lagerraum (2) mit einer Steuerungseinheit und/oder Auswerteeinheit (56) ausgestattet ist, die bevorzugt in eine übergeordnete IT-Struktur, besonderes bevorzugt umfassend zumindest eine Datenbank (58), eingebunden ist und/oder wobei die Steuerungseinheit und/oder die Auswerteeinheit (56) zur Durchführung der Lagerverwaltung und/oder Lagerkontrolle und/oder zur Steuerung und/oder Auswertung im Betrieb der Indikationsvorrichtung (52) eingerichtet ist.

Ein noch weiterer unabhängiger Aspekt der vorliegenden Erfindung betrifft ein Verfahren zur Bestandsüberwachung von Waren (42), insbesondere von mit Transpondern versehenen Waren (42), vorzugsweise unter Verwendung der Einrichtung (1) nach einem der vorangehenden Aspekte, wobei ein Lagerraum (2) zur Lagerung oder Zwischenlagerung von Waren (42) von einer Person über eine Personenvereinzelungsvorrichtung (4) betreten und/oder verlassen wird und Waren (42) über einen separat von der Personenvereinzelungsvorrichtung (4) ausgebildeten Warendurchgang (6) in den Lagerraum (2) hinein und/oder aus dem Lagerraum (2) heraus verbracht werden, wobei die jeweils durch den Warendurchgang (6) in den Lagerraum (2) herein oder aus diesem heraus verbrachten Waren (42) mittels einer Erfassungsvorrichtung (8) erfasst werden, wobei die jeweils erfassten Waren (42) vorzugsweise dem Bestand zugerechnet oder von diesem abgezogen werden, wobei bevorzugt entnommene Waren (42) dem jeweiligen Nutzerprofil zugeordnet werden.

Ein noch weiterer unabhängiger Aspekt der vorliegenden Erfindung betrifft ein Verfahren nach dem vorstehenden Aspekt, wobei zur Bulk-Erfassung von Waren eine Vielzahl von mit Transpondern versehenen Waren (42) in einem Lesebereich (72) der Erfassungsvorrichtung (8) positioniert wird, wobei wenigstens eine Leseeinrichtung die Transponder der Waren (42) berührungslos identifiziert, wobei ein Ausgang (74, 76) für innerhalb des Lesebereichs (72) befindliche Waren (42) zumindest während des Lesevorgangs durch eine Begrenzungseinrichtung (18, 20) begrenzt wird und wobei die Begrenzungseinrichtung (18, 20) den Ausgang (74, 76) des Lesebereichs (72) erst nach Ablauf einer vorbestimmten Zeitdauer nach Beginn eines jeweiligen Lesevorgangs der Leseeinrichtung freigibt, wobei bevorzugt das Erfassungsergebnis durch mehrere Verfahrensabschnitte ermittelt wird, wobei im ersten Verfahrensabschnitt die Parameter zur Einstellung der Leseeinheit für die folgenden Verfahrensabschnitte ermittelt werden.

### Bezugszeichenliste

- 1: Einrichtung zur Bestandsüberwachung
- 2: Lagerraum
- 4: Personenvereinzelungsvorrichtung
- 6: Warendurchgang
- 8: Erfassungsvorrichtung
- 10: Anzeigeeinrichtung
- 12: Identifikationsvorrichtung (innerhalb des Warendurchgangs)
- 14: Anzeigeeinrichtung
- 16: Identifikationsvorrichtung (außerhalb des Warendurchgangs)
- 18: Begrenzungseinrichtung
- 20: Begrenzungseinrichtung
- 22: Sensor
- 24: Notentriegelung
- 26: Verriegelungsvorrichtung
- 28: Warenerfassungsvorrichtung
- 32: Identifikationsvorrichtung
- 34: Anzeigeeinrichtung
- 36: Identifikationsvorrichtung
- 38: Lagerplätze
- 40: Lagerplatzanzeige
- 42: Waren
- 44: Informationsvorrichtung
- 46: Identifizierungsvorrichtung
- 48: Warenerfassungsvorrichtung
- 50: Anzeigeeinheit
- 52: Indikationsvorrichtung
- 54: Handleser
- 56: Steuerungs- und/oder Auswerteeinheit
- 58: Datenbank
- 60: Warentunnel
- 62: Erfassungseinrichtung
- 64: Beschickungsseite
- 66: Entnahmeseite
- 70: Leseeinrichtung
- 72: Lesebereich
- 74: Ausgang
- 76: Ausgang
- 78: Tunnelstruktur
- 80: Leseeinheiten
- 82: Träger
- 84: Portalschlitten
- 101: Einrichtung zur Bestandsüberwachung
- 106: Warendurchgang

## Patentansprüche

1. Einrichtung (1, 101) zur Bestandsüberwachung durch permanente Erfassung von Bestandsveränderungen von mit Transpondern versehenen Waren (42) kontinuierlich in Echtzeit,
- mit einem Lagerraum (2) zur Lagerung oder Zwischenlagerung von Waren (42), in dem Waren (42) mit Transpondern gelagert oder zwischengelagert sind,
- mit einer als Zugangskontrolle ausgebildete Personenvereinzelungsvorrichtung (4), über die der Lagerraum (2) von einer Person betreten und/oder verlassen werden kann, und
- mit einem Warendurchgang (6, 106), über den Waren (42) in den Lagerraum (2) hinein und aus dem Lagerraum (2) heraus verbracht werden können,
- wobei der Warendurchgang (6, 106) für das Passieren von Personen und für das Mitführen von Waren durch Personen beim Verlassen des Lagerraums eingerichtet ist,
- wobei der Warendurchgang (6, 106) zumindest eine Erfassungsvorrichtung (8) aufweist, die zur Erfassung von mit Transpondern versehenen Waren (42) eingerichtet ist,
- wobei der Warendurchgang (6, 106) dazu eingerichtet ist, ein Betreten des Lagerraums durch den Warendurchgang zu blockieren,
- wobei der Warendurchgang (6, 106) zumindest eine Identifizierungsvorrichtung (12, 16) zur Erfassung der Identität einer Person aufweist und die Identifizierungsvorrichtung (16) außerhalb des Lagerraums (2) angeordnet ist und wobei eine weitere Identifizierungsvorrichtung (12) innerhalb des Lagerraums (2) angeordnet ist,
- wobei der Warendurchgang dazu eingerichtet ist, das Passieren einer Person in Abhängigkeit der festgestellten Personenidentität freizugeben und/oder zu blockieren,
- wobei die innerhalb des Lagerraums angeordnete Identifizierungsvorrichtung (12) dazu eingerichtet ist, das Verlassen des Lagerraumes (2) durch einen Nutzer zu erfassen und das Verlassen des Lagerraums (2) durch einen Dienstleister durch den Warendurchgang zu blockieren, und
- wobei die Personenvereinzelungsvorrichtung (4) und der Warendurchgang (6, 106) separat ausgebildet sind.

2. Einrichtung (1) nach Anspruch 1, **dadurch gekennzeichnet, dass** die Personenvereinzelungsvorrichtung (4) zumindest eine Identifizierungsvorrichtung (32, 36) zur Erfassung der Identität einer Person aufweist, wobei die Identifizierungsvorrichtung (36) außerhalb des Lagerraums (2) angeordnet ist und/oder wobei eine Identifizierungsvorrichtung (32) innerhalb des Lagerraums (2) angeordnet ist und/oder wobei die Personenvereinzelungsvorrichtung (4) dazu eingerichtet ist, das Passieren einer Person in Abhängigkeit der festgestellten Personenidentität freizugeben und/oder zu blockieren.

3. Einrichtung (1) nach einem der vorangehenden Ansprüche, **dadurch gekennzeichnet, dass** die Personenvereinzelungsvorrichtung (4) eine Warenerfassungsvorrichtung (28) für mitgeführte Waren (42) aufweist, insbesondere mit einem Transponder versehene Waren (42), wobei die Personenvereinzelungsvorrichtung (4) bevorzugt dazu eingerichtet ist, das Passieren einer Person bei Erfassung unberechtigt mitgeführter Waren (42) zu blockieren und/oder das Passieren einer Person freizugeben, sofern keine Waren (42), keine unberechtigt mitgeführten Waren (42) und/oder lediglich berechtigt mitgeführte Waren (42) erfasst werden.

4. Einrichtung (1) nach einem der vorangehenden Ansprüche, **dadurch gekennzeichnet, dass** die Erfassungsvorrichtung (8) dazu eingerichtet ist, die von einem Nutzer entnommenen und erfassten Waren (42) vom Gesamtbestand abzuziehen und dem jeweiligen Profil des Nutzers zuzuordnen, und/oder die von einem Dienstleister durch den Warendurchgang (6, 106) in den Lagerraum (2) verbrachten und erfassten Waren (42) dem Gesamtbestand zuzuordnen.

5. Einrichtung nach einem der vorangehenden Ansprüche, **dadurch gekennzeichnet, dass** die Erfassungsvorrichtung (8) des Warendurchgangs (6, 106) wenigstens eine Leseeinrichtung (70) zur berührungslosen Identifikation von Transpondern aufweist, wobei die Leseeinrichtung (70) wenigstens eine Leseeinheit, vorzugsweise eine Mehrzahl von Leseeinheiten aufweist und/oder wobei die zumindest eine Leseeinheit als oder mit Antenne ausgebildet und im Lesebereich (72) beweglich , insbesondere automatisiert bewegbar, angeordnet ist.

6. Einrichtung (1) nach einem der vorangehenden Ansprüche, **dadurch gekennzeichnet, dass** im Lagerraum (2) eine Informationsvorrichtung (44) vorgesehen ist, die zur Bedienung durch einen Nutzer eingerichtet ist, wobei die Informationsvorrichtung (44) vorzugsweise zur Kontrolle und/oder Anzeige von Daten einer von einem Lagerplatz (38) entnommenen Ware eingerichtet ist und/oder wobei die Informationsvorrichtung (44) zur Anzeige und/oder Veränderung und/oder Erzeugung von Profildaten und/oder personalisierten Daten eines Nutzers, insbesondere profilspezifischen Kontingentdaten eingerichtet ist.

7. Einrichtung (1) nach einem der vorangehenden Ansprüche, **dadurch gekennzeichnet, dass** der Lagerraum (2) als Konsignationslager und/oder Ausgabelager und/oder Zwischenlager eingerichtet ist und/oder wobei der Lagerraum (2) mit einer Vielzahl von Lagerplätzen (38) und/oder zugehörigen Lagerplatzanzeigen (40) ausgestattet ist.

8. Einrichtung (1) nach einem der vorangehenden Ansprüche, **dadurch gekennzeichnet, dass** der Lagerraum (2) zur statischen und/oder dynamischen Lagerplatzverwaltung eingerichtet ist und/oder wobei der Lagerraum (2) eine Indikationsvorrichtung (52) zur Anzeige der Ortsposition einzelner Waren (42) innerhalb des Lagerraums (2) aufweist, die bevorzugt zur nutzerspezifischen und/oder temporär begrenzten Indikation von Warenpositionen eingerichtet ist.

9. Einrichtung (1) nach Anspruch 8, **dadurch gekennzeichnet, dass** die Indikationsvorrichtung (52) vorzugsweise zur Darstellung einer Orientierungsgrafik und/oder eines Bewegungspfades, bevorzugt in einem Raumschema und/oder mit Objektkennzeichnung, und/oder zur Darstellung virtueller Realität und/oder gemischter Realität eingerichtet ist.

10. Einrichtung (1) nach Anspruch 8 oder 9, **dadurch gekennzeichnet, dass** die Indikationsvorrichtung (52) zur Erzeugung von Tonsignalen oder optischen Signalen, insbesondere Leucht- und/oder Farbsignalen und/oder Text, insbesondere elektronischen Textanzeigen, eingerichtet ist, wobei die Indikationsvorrichtung (52) besonders bevorzugt als Visualisierungseinrichtung ausgebildet ist, bevorzugt als Touchscreen und/oder Tablet-PC oder als Head-Mounted-Display für virtuelle Realität und/oder gemischte Realität und/oder als optische Lagerplatzanzeige, und/oder wobei die Indikationsvorrichtung (52) als Visualisierungseinrichtung für bildgebende Verfahren eingerichtet ist.

11. Einrichtung (1) nach einem der vorangehenden Ansprüche, **dadurch gekennzeichnet, dass** der Lagerraum (2) mit einer Steuerungseinheit und/oder Auswerteeinheit (56) ausgestattet ist, die bevorzugt in eine übergeordnete IT-Struktur, besonderes bevorzugt umfassend zumindest eine Datenbank (58), eingebunden ist und/oder wobei die Steuerungseinheit und/oder die Auswerteeinheit (56) zur Durchführung der Lagerverwaltung und/oder Lagerkontrolle und/oder zur Steuerung und/oder Auswertung im Betrieb der Indikationsvorrichtung (52) eingerichtet ist.

12. Verfahren zur Bestandsüberwachung von Waren (42) durch permanente Erfassung von Bestandsveränderungen von mit Transpondern versehenen Waren (42) kontinuierlich in Echtzeit und unter Verwendung der Einrichtung (1, 106) nach einem der vorangehenden Ansprüche 1 bis 11, wobei ein Lagerraum (2) zur Lagerung oder Zwischenlagerung von Waren (42), in dem Waren (42) mit Transpondern gelagert oder zwischengelagert sind, von einer Person über eine Personenvereinzelungsvorrichtung (4), die als Zugangskontrolle ausgebildet ist, betreten und/oder verlassen wird und Waren (42) über einen separat von der Personenvereinzelungsvorrichtung (4) ausgebildeten Warendurchgang (6, 106) in den Lagerraum (2) hinein und aus dem Lagerraum (2) heraus verbracht werden, wobei die jeweils durch den Warendurchgang (6, 106) in den Lagerraum (2) herein oder aus diesem heraus verbrachten und mit Transpondern versehenen Waren (42) mittels der Erfassungsvorrichtung (8) erfasst werden, wobei die jeweils erfassten Waren (42) dem Bestand zugerechnet oder von diesem abgezogen werden, wobei bevorzugt entnommene Waren (42) dem jeweiligen Nutzerprofil zugeordnet werden.

13. Verfahren nach Anspruch 12, wobei zur Bulk-Erfassung von Waren eine Vielzahl von mit Transpondern versehenen Waren (42) in einem Lesebereich (72) der Erfassungsvorrichtung (8) positioniert wird, wobei wenigstens eine Leseeinrichtung die Transponder der Waren (42) berührungslos identifiziert, wobei ein Ausgang (74, 76) für innerhalb des Lesebereichs (72) befindliche Waren (42) zumindest während des Lesevorgangs durch eine Begrenzungseinrichtung (18, 20) begrenzt wird und wobei die Begrenzungseinrichtung (18, 20) den Ausgang (74, 76) des Lesebereichs (72) erst nach Ablauf einer vorbestimmten Zeitdauer nach Beginn eines jeweiligen Lesevorgangs der Leseeinrichtung freigibt, wobei bevorzugt das Erfassungsergebnis durch mehrere Verfahrensabschnitte ermittelt wird und wobei im ersten Verfahrensabschnitt die Parameter zur Einstellung der Leseeinheit für die folgenden Verfahrensabschnitte ermittelt werden.

## Claims

1. Device (1, 101) for inventory monitoring by permanently recording of inventory changes of goods (42) provided with transponders continuously in real time,
- with a storage room (2) for the storage or temporary storage of goods (42), in which goods (42) with transponders are stored or temporarily stored,
- with a person separation device (4) designed as an access control, via which the storage room (2) can be entered and/or exited by a person, and
- with a goods passage (6, 106), via which goods (42) can be brought into and out of the storage room (2),
- wherein the goods passage (6, 106) is set up for the passage of persons and for the carrying of goods by persons when leaving the storage space,
- wherein the goods passage (6, 106) comprises at least one detection device (8) which is set up to detect goods (42) provided with transponders,
- wherein the goods passage (6, 106) is set up to block entry into the storage room through the goods passage,
- wherein the goods passage (6, 106) has at least one identification device (12, 16) for detecting the identity of a person and the identification device (16) is arranged outside the storage room (2) and wherein a further identification device (12) is arranged inside the storage room (2),
- wherein the goods passage is set up to allow and/or block the passage of a person depending on the identity of the person detected,
- wherein the identification device (12) arranged within the storage room is set up to detect the leaving of the storage room (2) by a user and to block the leaving of the storage room (2) by a service provider through the goods passage, and
- wherein the person separation device (4) and the goods passage (6, 106) are designed separately.

2. Device (1) according to claim 1, **characterized in that** the person separation device (4) has at least one identification device (32, 36) for detecting the identity of a person, wherein the identification device (36) is arranged outside the storage room (2) and/or wherein an identification device (32) is arranged inside the storage room (2) and/or wherein the person separation device (4) is set up to release and/or block the passage of a person as a function of the detected person identity.

3. Device (1) according to one of the preceding claims, **characterized in that** the person separation device (4) has a goods detection device (28) for carried goods (42), in particular goods (42) provided with a transponder, the person separation device (4) preferably being set up to block the passage of a person when unauthorized carried goods (42) are detected and/or to release the passage of a person, provided that no goods (42), no unauthorized carried goods (42) and/or only authorized carried goods (42) are detected.

4. Device (1) according to one of the preceding claims, **characterized in that** the detection device (8) is set up to deduct the goods (42) removed and detected by a user from the total stock and to assign them to the respective profile of the user, and/or to assign the goods (42) brought into the storage room (2) by a service provider through the goods passage (6, 106) and detected to the total stock.

5. Device according to one of the preceding claims, **characterized in that** the detection device (8) of the goods passage (6, 106) has at least one reading device (70) for contactless identification of transponders, the reading device (70) having at least one reading unit, preferably a plurality of reading units, and/or the at least one reading unit being designed as or with an antenna and being arranged movably, in particular automatically movably, in the reading area (72).

6. Device (1) according to one of the preceding claims, **characterized in that** an information device (44) is provided in the storage room (2), which is set up for operation by a user, wherein the information device (44) is preferably set up for checking and/or displaying data of a product removed from a storage location (38) and/or wherein the information device (44) is set up for displaying and/or changing and/or generating profile data and/or personalized data of a user, in particular profile-specific contingent data.

7. Device (1) according to one of the preceding claims, **characterized in that** the storage room (2) is set up as a consignment store and/or issue store and/or intermediate store and/or wherein the storage room (2) is equipped with a plurality of storage locations (38) and/or associated storage location displays (40).

8. Device (1) according to one of the preceding claims, **characterized in that** the storage room (2) is set up for static and/or dynamic storage location management and/or wherein the storage room (2) has an indication device (52) for indicating the location position of individual goods (42) within the storage room (2), which is preferably set up for user-specific and/or temporarily limited indication of goods positions.

9. Device (1) according to claim 8, **characterized in that** the indication device (52) is preferably set up to display an orientation graphic and/or a movement path, preferably in a spatial diagram and/or with object identification, and/or to display virtual reality and/or mixed reality.

10. Device (1) according to claim 8 or 9, **characterized in that** the indication device (52) is set up to generate sound signals or optical signals, in particular luminous and/or colour signals and/or text, in particular electronic text displays, the indication device (52) being particularly preferably designed as a visualization device, preferably as a touch screen and/or tablet PC or as a head-mounted display for virtual reality and/or mixed reality and/or as an optical storage location display, and/or the indication device (52) being set up as a visualization device for imaging methods.

11. Device (1) according to one of the preceding claims, **characterized in that** the storage room (2) is equipped with a control unit and/or evaluation unit (56), which is preferably integrated into a higher-level IT structure, in particular preferably comprising at least one database (58), and/or wherein the control unit and/or the evaluation unit (56) is set up to carry out the storage management and/or storage control and/or to control and/or evaluate during operation of the indication device (52).

12. Method for inventory monitoring of goods (42) by permanent detection of inventory changes of goods (42) provided with transponders continuously in real time and using the device (1, 106) according to one of the preceding claims 1 to 11, wherein a storage room (2) for storage or temporary storage of goods (42), in which goods (42) with transponders are stored or temporarily stored, is entered and/or left by a person via a person separation device (4), which is designed as an access control, and goods (42) are brought into and out of the storage room (2) via a goods passage (6, 106) formed separately from the personnel separation device (4), the goods (42) entering and/or leaving the storage room (2) through the goods passage (6, 106) into or out of the storage room (2) and provided with transponders are detected by means of the detection device (8), the respectively detected goods (42) being added to or subtracted from the stock, preferably removed goods (42) being assigned to the respective user profile.

13. Method according to claim 12, wherein for bulk detection of goods a plurality of goods (42) provided with transponders is positioned in a reading area (72) of the detection device (8), wherein at least one reading device identifies the transponders of the goods (42) without contact, wherein an exit (74, 76) for goods (42) located within the reading area (72) is limited at least during the reading operation by a limiting device (18, 20), and wherein the limiting device (18, 20) releases the exit (74, 76) of the reading area (72) only after a predetermined period of time has elapsed after the start of a respective reading operation of the reading device, wherein preferably the detection result is determined by a plurality of method portions and wherein the parameters for setting the reading unit for the following method portions are determined in the first method portions.

## Revendications

1. Appareil (1, 101) pour la surveillance des stocks par détection permanente, en continu et en temps réel, de variations de stocks de marchandises (42) pourvues de transpondeurs,
- comportant un espace de stockage (2) pour le stockage ou l'entreposage de marchandises (42), dans lequel des marchandises (42) comportant des transpondeurs sont stockées ou entreposées,
- comportant un dispositif d'individualisation de personnes (4) réalisé comme un moyen de contrôle d'accès, par l'intermédiaire duquel une personne peut entrer et/ou sortir de l'espace de stockage (2), et
- comportant un passage de marchandises (6, 106) par l'intermédiaire duquel des marchandises (42) peuvent être introduites dans l'espace de stockage (2) et être extraites de l'espace de stockage (2),
- dans lequel le passage de marchandises (6, 106) est conçu pour le passage de personnes et pour le transport de marchandises par des personnes lorsqu'elles quittent l'espace de stockage,
- dans lequel le passage de marchandises (6, 106) présente au moins un dispositif de détection (8) qui est configuré pour détecter des marchandises (42) pourvues de transpondeurs,
- dans lequel le passage de marchandises (6, 106) est configuré pour bloquer l'accès à l'espace de stockage par le passage de marchandises,
- dans lequel le passage de marchandises (6, 106) présente au moins un dispositif d'identification (12, 16) pour la détection de l'identité d'une personne et le dispositif d'identification (16) est disposé à l'extérieur de l'espace de stockage (2) et dans lequel un autre dispositif d'identification (12) est disposé à l'intérieur de l'espace de stockage (2),
- dans lequel le passage de marchandises est configuré pour autoriser et/ou bloquer le passage d'une personne en fonction de l'identité de la personne constatée,
- dans lequel le dispositif d'identification (12) disposé à l'intérieur de l'espace de stockage est configuré pour détecter la sortie d'un utilisateur de l'espace de stockage (2) et pour bloquer la sortie d'un prestataire de services de l'espace de stockage (2) par le passage de marchandises, et
- dans lequel le dispositif d'individualisation de personnes (4) et le passage de marchandises (6, 106) sont réalisés séparément.

2. Appareil (1) selon la revendication 1, **caractérisé en ce que** le dispositif d'individualisation de personnes (4) présente au moins un dispositif d'identification (32, 36) pour la détection de l'identité d'une personne, dans lequel le dispositif d'identification (36) est disposé à l'extérieur de l'espace de stockage (2) et/ou dans lequel un dispositif d'identification (32) est disposé à l'intérieur de l'espace de stockage (2) et/ou dans lequel le dispositif d'individualisation de personnes (4) est configuré pour autoriser et/ou bloquer le passage d'une personne en fonction de l'identité de la personne constatée.

3. Appareil (1) selon l'une des revendications précédentes, **caractérisé en ce que** le dispositif d'individualisation de personnes (4) présente un dispositif de détection de marchandises (28) pour des marchandises (42) emportées, en particulier des marchandises (42) pourvues d'un transpon-deur, dans lequel le dispositif d'individualisation de personnes (4) est de préférence configuré pour bloquer le passage d'une personne lors de la détection de marchandises (42) emportées sans autorisation et/ou pour autoriser le passage d'une personne dans la mesure où aucune marchandise (42), aucune marchandise (42) emportée sans autorisation et/ou uniquement des marchandises (42) emportées avec autorisation sont détectées.

4. Appareil (1) selon l'une des revendications précédentes, **caractérisé en ce que** le dispositif de détection (8) est configuré pour déduire du stock total les marchandises (42) prélevées par un utilisateur et détectées et pour les associer au profil respectif de l'utilisateur, et/ou pour associer au stock total les marchandises (42) introduites dans l'espace de stockage (2) par un prestataire de services par le biais du passage de marchandises (6, 106) et détectées.

5. Appareil selon l'une des revendications précédentes, **caractérisé en ce que** le dispositif de détection (8) du passage de marchandises (6, 106) présente au moins un appareil de lecture (70) pour l'identification sans contact de transpondeurs, dans lequel l'appareil de lecture (70) présente au moins une unité de lecture, de préférence une pluralité d'unités de lecture, et/ou dans lequel l'au moins une unité de lecture est réalisée comme une antenne ou avec une antenne et est disposée dans la zone de lecture (72) de manière à être mobile, en particulier de manière à être mobile de manière automatisée.

6. Appareil (1) selon l'une des revendications précédentes, **caractérisé en ce qu'**est prévu dans l'espace de stockage (2) un dispositif d'information (44) qui est configuré pour être manipulé par un utilisateur, dans lequel le dispositif d'information (44) est configuré de préférence pour contrôler et/ou afficher des données d'une marchandise prélevée d'un emplacement de stockage (38) et/ou dans lequel le dispositif d'information (44) est configuré pour afficher et/ou modifier et/ou générer des données de profil et/ou des données personnalisées d'un utilisateur, en particulier des données de contingence spécifiques au profil.

7. Appareil (1) selon l'une des revendications précédentes, **caractérisé en ce que** l'espace de stockage (2) est conçu en tant que magasin de consignation et/ou magasin de distribution et/ou magasin intermédiaire et/ou dans lequel l'espace de stockage (2) est équipé d'une pluralité d'emplacements de stockage (38) et/ou d'indicateurs d'emplacements de stockage (40) associés.

8. Appareil (1) selon l'une des revendications précédentes, **caractérisé en ce que** l'espace de stockage (2) est conçu pour la gestion statique et/ou dynamique d'emplacements de stockage et/ou dans lequel l'espace de stockage (2) présente un dispositif d'indication (52) pour l'affichage de la position locale de marchandises (42) individuelles à l'intérieur de l'espace de stockage (2), lequel dispositif d'indication est de préférence configuré pour l'indication spécifique à l'utilisateur et/ou limitée temporairement de positions de marchandises.

9. Appareil (1) selon la revendication 8, **caractérisé en ce que** le dispositif d'indication (52) est de préférence configuré pour la représentation d'un graphique d'orientation et/ou d'un chemin de déplacement, de préférence dans un schéma spatial et/ou avec un marquage d'objet, et/ou pour la représentation d'une réalité de synthèse et/ou d'une réalité mixte.

10. Appareil (1) selon la revendication 8 ou 9, **caractérisé en ce que** le dispositif d'indication (52) est configuré pour la génération de signaux sonores ou de signaux optiques, en particulier de signaux lumineux et/ou de signaux de couleur et/ou de texte, en particulier d'affichages de texte électronique, dans lequel le dispositif d'indication (52) est configuré de manière particulièrement préférée comme appareil de visualisation, de préférence comme écran tactile et/ou tablette PC ou comme affichage tête haute pour la réalité de synthèse et/ou la réalité mixte et/ou comme affichage optique d'emplacement de stockage, et/ou dans lequel le dispositif d'indication (52) est configuré comme appareil de visualisation pour des procédés d'imagerie.

11. Appareil (1) selon l'une des revendications précédentes, **caractérisé en ce que** l'espace de stockage (2) est équipé d'une unité de commande et/ou d'une unité d'évaluation (56) qui sont de préférence intégrées dans une structure **IT** supérieure, comprenant de manière particulièrement préférée au moins une base de données (58), et/ou dans lequel l'unité de commande et/ou l'unité d'évaluation (56) sont configurées pour la réalisation de la gestion des stocks et/ou du contrôle des stocks et/ou pour la commande et/ou l'évaluation lors du fonctionnement du dispositif d'indication (52).

12. Procédé pour la surveillance des stocks de marchandises (42) par détection permanente, en temps réel et en continu, de variations de stocks de marchandises (42) pourvues de transpondeurs et à l'aide de l'appareil (1, 106) selon l'une des revendications 1 à 11 précédentes, dans lequel un espace de stockage (2) pour le stockage ou l'entreposage de marchandises (42), dans lequel des marchandises (42) pourvues de transpondeurs sont stockées ou entreposées, est ouvert par une personne par l'intermédiaire d'un dispositif d'individualisation de personnes (4) qui est conçu comme un moyen de contrôle d'accès, et des marchandises (42) sont introduites dans l'espace de stockage (2) et sorties de l'espace de stockage (2) par l'intermédiaire d'un passage de marchandises (6, 106) conçu séparément du dispositif d'individualisation de personnes (4), dans lequel les marchandises pourvues de transpondeurs et introduites respectivement par le passage de marchandises (6, 106) dans l'espace de stockage (2) ou sorties de celui-ci sont détectées au moyen du dispositif de détection (8) dans le passage de marchandises, dans lequel les marchandises (42) respectivement détectées sont ajoutées au stock ou déduites de celui-ci, dans lequel, de préférence, des marchandises (42) prélevées sont associées au profil utilisateur respectif.

13. Procédé selon la revendication 12, dans lequel, pour la détection en vrac de marchandises, une pluralité de marchandises (42) pourvues de transpondeurs est positionnée dans une zone de lecture (72) du dispositif de détection (8), dans lequel au moins un appareil de lecture identifie sans contact les transpondeurs des marchandises (42), dans lequel une sortie (74, 76) pour des marchandises (42) se trouvant à l'intérieur de la zone de lecture (72) est limitée, au moins pendant le processus de lecture, par un appareil de limitation (18, 20), et dans lequel l'appareil de limitation (18, 20) ne libère la sortie (74, 76) de la zone de lecture (72) qu'après l'écoulement d'une durée prédéterminée après le début d'une opération de lecture respective de l'appareil de lecture, dans lequel, de préférence, le résultat de la détection est déterminé par plusieurs sections de procédé et dans lequel les paramètres pour le réglage de l'unité de lecture pour les sections de procédé suivantes sont déterminés dans la première section de procédé.
